# EUROPEAN PATENT APPLICATION

(11) **EP 4 794 415 A1**
(43) Date of publication of application: **19.08.2026**
(21) Application number: 23955120.3
(22) Date of filing: 11.10.2023
(51) Int. Cl.: H04W 72/0446

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LI, Yapu, Dongguan, Guangdong 523860 (CN); LUO, Chaoming, Dongguan, Guangdong 523860 (CN); GAO, Ning, Dongguan, Guangdong 523860 (CN)
(74) Representative: RGTH
(86) International application number: PCT/CN2023/124087
(87) International publication number: WO 2025/076737

(57) **Abstract**

Provided are a wireless communication method and a communication device. The communication method comprises: a first device sends a first trigger frame, wherein the first device communicates with a second device by means of a relay device, and the first trigger frame is used for instructing the first device to share an acquired first resource in a TXOP to the second device and/or the relay device. On the basis of the present first trigger frame, a triggering-based TXOP sharing process can be reused, and relay-based TXOP sharing is achieved. That is to say, the present application provides a relay-based channel access method, i.e., a relay transmission-based TXOP sharing method initiated by an AP. The present application provides a relay-based trigger TXOP sharing method, which can solve the problems of synchronization of behaviors on an operation channel of a BSS where a source station, a relay, and a destination station are located and TXOP sharing, thereby improving the transmission efficiency of a network, and reducing the cost of the relay.

## Description

### TECHNICAL FIELD

The present application relates to the field of communications, and more specifically, to a wireless communication method and a communication device.

### BACKGROUND

With the development of technology, some communication standards projects have proposed relay-based communication technologies. Regarding relay-based transmission opportunity (TXOP) sharing, there are still some problems to be solved.

### SUMMARY

The present application provides a wireless communication method and a communication device. Various aspects involved in the present application are described as follows.

In a first aspect, a wireless communication method is provided, and the method includes: transmitting, by a first device, a first trigger frame; where the first device communicates with a second device via a relay device, and the first trigger frame is used to indicate sharing of first resources within an obtained transmission opportunity (TXOP) by the first device with the second device and/or the relay device for frame exchange between the first device and the second device.

In a second aspect, a wireless communication method is provided, and the method includes: receiving, by a second device, a first trigger frame transmitted by a first device; where the second device communicates with the first device via a relay device, and the first trigger frame is used to indicate sharing of first resources within an obtained transmission opportunity (TXOP) by the first device with the second device for frame exchange between the first device and the second device.

In a third aspect, a wireless communication method is provided, and the method includes: receiving, by a relay device, a first trigger frame transmitted by a first device; where the first device communicates with a second device via the relay device, and the first trigger frame is used to indicate sharing of first resources within an obtained transmission opportunity (TXOP) by the first device with the relay device for frame exchange between the first device and the second device.

In a fourth aspect, a communication device is provided, and the communication device is a first device. The communication device includes: a transmitting unit, configured to transmit a first trigger frame; where the first device communicates with the second device via a relay device, and the first trigger frame is used to indicate sharing of first resources within an obtained transmission opportunity (TXOP) by the first device with the second device and/or the relay device for frame exchange between the first device and the second device.

In a fifth aspect, a communication device is provided, and the communication device is a second device. The communication device includes: a first receiving unit, configured to receive a first trigger frame transmitted by a first device; where the second device communicates with a first device via a relay device, and the first trigger frame is used to indicate sharing of first resources within an obtained transmission opportunity (TXOP) by the first device with the second device for frame exchange between the first device and the second device.

In a sixth aspect, a communication device is provided, and the communication device is a relay device. The communication device includes: a second receiving unit, configured to receive a first trigger frame transmitted by a first device; where the first device communicates with the second device via the relay device, and the first trigger frame is used to indicate sharing of first resources within an obtained transmission opportunity (TXOP) by the first device with the relay device for frame exchange between the first device and the second device.

In a seventh aspect, a communication device is provided, and the communication device includes a processor and a memory. The memory is configured to store one or more computer programs, the processor is configured to invoke the computer program(s) in the memory to enable the communication device to perform part or all of the steps in the method in the first aspect and/or the second aspect.

In an eighth aspect, a communication system is provided in embodiments of the present application, and the communication system includes the aforementioned communication device. In another possible design, the communication system may further include other devices that interact with the communication device in the solutions provided in the embodiments of the present application.

In a ninth aspect, a computer-readable storage medium is provided in the embodiments of the present application, and the computer-readable storage medium has a computer program stored thereon, which enables a communication device to perform part or all of the steps in the methods in various aspects above.

In a tenth aspect, a computer program product is provided in the embodiments of the present application. The computer program product includes a non-transitory computer-readable storage medium having a computer program stored thereon, which is operable to enable a communication device to perform part or all of the steps in the methods in various aspects above. In some implementations, the computer program product may be a software installation package.

In an eleventh aspect, a chip is provided in the embodiments of the present application, and the chip includes a memory and a processor. The processor is configured to invoke and execute a computer program from the memory, to implement part or all of the steps described in the methods in various aspects above.

Based on this first trigger frame, a triggered TXOP sharing procedure can be reused to implement relay-based TXOP sharing. That is to say, the present application provides a relay-based channel access method, i.e., a relay transmission-based TXOP sharing method initiated by an access point (AP). The relay-based triggered TXOP sharing method proposed in the present application allows the first device to allocate a portion of time domain resources (i.e., a portion of the time duration of the TXOP) and/or a portion of frequency domain resources (i.e., a portion of the bandwidth occupied by the TXOP) in the obtained TXOP to the second device, to enable the second device to transmit one or more PPDUs, thereby achieving frame exchange between the second device and the first device.

### BRIEF DESCRIPTION OF THE DRAWINGS

FIG. 1 is a schematic diagram of a wireless communication system to which the embodiments of the present application are applicable.
FIG. 2 is an example diagram of a relay node.
FIG. 3 is an example diagram showing a frame exchange procedure based on medium access control (MAC) relay.
FIG. 4 is an example diagram showing the sub-1 GHz (S1G) relay architecture.
FIG. 5A is an example diagram showing a downlink relay transmission procedure based on explicit acknowledge.
FIG. 5B is an example diagram showing an uplink relay transmission procedure based on explicit acknowledge.
FIG. 5C is an example diagram showing a downlink relay transmission procedure based on implicit acknowledge.
FIG. 5D is an example diagram showing an uplink relay transmission procedure based on implicit acknowledge.
FIG. 6 is a schematic flowchart of a wireless communication method provided in the embodiments of the present application.
FIG. 7 is an example diagram showing a triggered TXOP sharing procedure.
FIG. 8 is a schematic diagram showing a format of the first trigger frame provided in the embodiments of the present application.
FIG. 9 is a schematic diagram showing a User Information field format provided in the embodiments of the present application.
FIG. 10 is an example diagram showing the network architecture applied in the present application.
FIG. 11A is an example diagram of a wireless communication method provided in Embodiment 1 of the present application.
FIG. 11B is an example diagram of another wireless communication method provided in Embodiment 1 of the present application.
FIG. 12A is an example diagram of a wireless communication method provided in Embodiment 2 of the present application.
FIG. 12B is an example diagram of another wireless communication method provided in Embodiment 2 of the present application.
FIG. 13 is an example diagram of a wireless communication method provided in Embodiment 3 of the present application.
FIG. 14 is an example diagram of a wireless communication method provided in Embodiment 4 of the present application.
FIG. 15 is a schematic block diagram of a communication device provided in the embodiments of the present application.
FIG. 16 is a schematic block diagram of another communication device provided in the embodiments of the present application.
FIG. 17 is a schematic block diagram of yet another communication device provided in the embodiments of the present application.
FIG. 18 is a schematic block diagram of an apparatus for communication provided in the embodiments of the present application.

### DETAILED DESCRIPTION

The technical solutions in the present application will be described below with reference to the accompanying drawings.

### Communication system

The technical solutions in the embodiments of the present application may be applied to various communication systems, such as wireless local area networks (WLAN), wireless fidelity (WiFi), high performance radio local area networks (HIPELAN), wide area networks (WAN), cellular networks, or other communication systems. As another example, the technical solutions provided in the embodiments of the present application may be applied to communication systems employing the 802.11 standard. Exemplarily, the 802.11 standard includes, but is not limited to, the 802.11ax standard, the 802.11be standard, the next-generation 802.11 standard, etc.

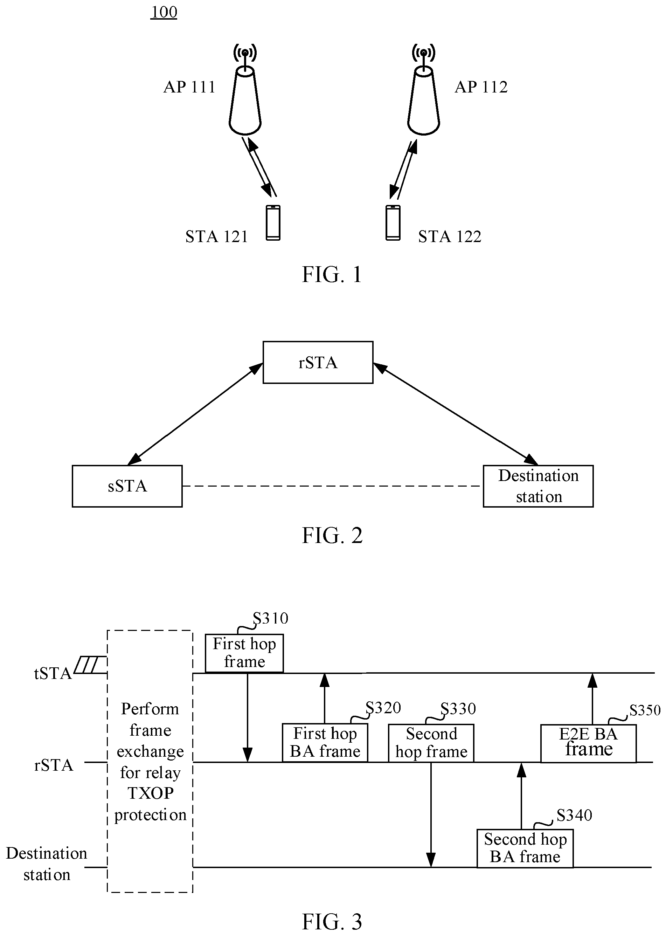

FIG. 1 illustrates a schematic diagram of a communication system to which the embodiments of the present application are applicable. As illustrated in FIG. 1, communication devices in the communication system 100 may include an access point (AP) 111, an AP 112, and a station (STA) 121 and a STA 122. The STA 121 may access the network via the AP 111, and the STA 122 may access the network via the AP 112.

In some implementations, a STA may establish an association relationship with one or more APs. Thereafter, the STA and APs having an association relationship can communicate with each other. As illustrated in FIG. 1, the AP 111 and the STA 121 can communicate with each other after the association relationship is established therebetween, and the AP 112 and the STA 122 can communicate with each other after the association relationship is established therebetween.

In some implementations, the communication within the communication system 100 may occur between an AP and a non-AP STA, between a non-AP STA and another non-AP STA, or between a STA and a peer STA. The peer STA may refer to a device that engages in peer-to-peer communication with the STA. For example, the peer STA may be an AP or a non-AP STA.

It should be understood that FIG. 1 exemplarily illustrates two AP STAs and two non-AP STAs. The communication system 100 may include a greater number of AP STAs, or the communication system 100 may include other numbers of non-AP STAs, which is not limited in the embodiments of the present application.

In addition, the aforementioned communication system may be applied in multi-device collaboration scenarios, such as, multiple access points (Multi-AP) collaboration or multi-station collaboration.

In the embodiments of the present application, the names of the AP and/or STA are not limited. In some scenarios, the AP may also be referred to as an AP STA, that is, in a sense, an AP is also a type of STA. In other scenarios, the STA may also be referred to as a non-AP STA.

In some scenarios, the aforementioned communication device may also be a "multi-link device (MLD)", that is, a device that can communicate via multiple communication links. These multiple communication links may include communication links in different frequency bands, for example, a millimeter-wave band and/or a low-frequency band. Generally, if a multi-link device is an AP, the AP may also be referred to as a "multi-link AP". If a multi-link device is a STA, the STA may also be referred to as a "multi-link STA".

In the embodiments of the present application, the AP may be a device in a wireless network. The AP may be a communication entity such as a communication server, a router, a switch, or a bridge. Alternatively, the AP may include various forms of macro base stations, micro base stations, relay stations, etc. Of course, the AP may also be a chip, a circuit, or a processing system of these various forms of devices, used to implement the methods and functions in the embodiments of the present application. AP devices may be applied in various scenarios, such as a sensor node in smart city (e.g., a smart water meter, a smart electricity meter, a smart air detection node), a smart device in smart home (e.g., a smart camera, a projector , a display, a TV, a speaker, a refrigerator, a washing machine), a node in Internet of Things (IoT), an entertainment terminal (e.g., wearable devices such as AR, VR), a smart device in smart office (e.g., a printer, a projector), a vehicle-to-everything (V2X) device in Internet of Vehicles, and some infrastructures in daily life scenarios (e.g., a vending machine, a in-store self-navigation kiosks, a in-store self-checkout device, a self-ordering kiosks).

In some implementations, the role of a STA in the communication system is not absolute. In some scenarios, a STA may serve as an AP. For example, in a scenario where a mobile phone connects to a router, the mobile phone can be a non-AP STA, while in a scenario where the mobile phone serves as a hotspot for other mobile phones, the mobile phone acts as an AP.

In the embodiments of the present application, the STA may be a device with wireless transceiver function. For example, the device may support the 802.11 series of protocols and be capable of communicating with AP or other STAs. For example, a STA is any user communication device that allows a user to communicate with an AP and thereby with a WLAN. The STA device may be, for example, a user equipment (UE), a mobile station (MS), a mobile terminal (MT), an access terminal, a subscriber unit, a subscriber station, a mobile console, a mobile platform, a remote station, a remote terminal, a mobile device, a user terminal, a terminal, a wireless communication equipment, a user agent, a user device, etc.

The STA in the embodiments of the present application may also be a device that provides voice/data connectivity to users, such as a handheld device with wireless connectivity function, or a vehicle-mounted device with wireless connectivity function. The example of such device includes: a mobile phone, a tablet computer, a laptop computer, a palmtop, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminals in smart home, a cellular phone, a cordless phone, a session initiation protocol (SIP) phone, a wireless local loop (WLL) station, a personal digital assistant (PDA), a handheld device with wireless communication function, a computing device or other processing devices connected to a wireless modem, an in-vehicle device, a wearable device, a terminal device in 5G networks, or a terminal device in future evolved public land mobile communication networks (PLMNS), which is not limited in the embodiments of the present application.

As an example, but not a limitation, the STA device in the embodiments of the present application may also be a wearable device. The wearable devices, also referred to as wearable smart devices, are a general term for wearable devices developed by applying wearable technology to intelligently design daily wearables, such as glasses, gloves, watches, clothing, or shoes. Example of wearable devices include: smart watches, smart glasses, and devices that only focus on a certain type of application function and that need to be used in conjunction with other devices (such as smart phones), such as various smart bracelets or smart jewelry devices for monitoring vital signs.

In addition, in the embodiments of the present disclosure, the STA device may also be a terminal device in an Internet of Things (IoT) system. IoT is an important part of the future development of information technology, with its main technical feature being the connection of objects to networks through communication technology, so as to achieve intelligent networks for man-machine connectivity and things connectivity. In the embodiments of the present application, the IoT technology can enable massive connectivity, deep coverage and terminal power saving through technologies such as narrow band (NB) technology.

In addition, in the embodiments of the present disclosure, the STA device may be a device in an Internet of Vehicles system. The communication methods in the Internet of Vehicles system are collectively referred to as V2X (X represents anything). For example, the V2X communication includes: a vehicle to vehicle (V2V) communication, a vehicle to infrastructure (V2I) communication, a vehicle to pedestrian (V2P) communication, a vehicle to network (V2N) communication, etc.

In addition, in the embodiments of the present application, the STA device may also include sensors such as a smart printer, a train detector, and a gas station, and their main functions include collecting data (for some terminal devices), receiving control information and downlink data from AP devices, and transmitting electromagnetic waves to transmit data to the AP devices.

In addition, the AP device in the embodiments of the present application may be a device for communicating with a STA device. The AP device may be a network device in a wireless local area network, and the AP device may be used to communicate with a STA device via the wireless local area network.

From the perspective of the communication standards supported by the AP, in some implementations, the AP may be a device supporting the 802.11be standard. The AP may also be a device that supports various current and future wireless local area networks (WLAN) standards of the 802.11 family, such as 802.11ax, 802.11ac, 802.11n, 8**0**2.11g, 802.11b, and 802.11a.

From the perspective of the communication standards supported by the STA, in some implementations, the non-AP STA may support the 802.11be standard. The non-AP STA may also support various current and future WLAN standards of the 802.11 family, such as 802.11ax, 802.11ac, 802.11n, 802.11g, 802.11b, and 802.11a.

In the embodiments of the present application, there is no limitation on the supportable frequency bands by the WLAN technology. In some implementations, the supportable frequency bands by the WLAN technology may include, but are not limited to, low-frequency bands (e.g., 2.4 GHz, 5 GHz, and 6 GHz) and high-frequency bands (e.g., 45 GHz, and 60 GHz).

It should be understood that the specific forms of the STA device and the AP device are not particularly limited in the embodiments of the present disclosure, and the descriptions herein are merely exemplary.

### Relay-based communication

With the development of technology, some communication standard projects (e.g., the next-generation Wi-Fi technology standard project, ultra-high reliability (UHR)) have proposed relay-based communication technology.

Relay-based communication technology can be implemented through a relay node, which may also be referred to as a relay entity, a relay device, a relay STA (rSTA), a relay, etc.

FIG. 2 illustrates an example diagram of a relay node. As illustrated in FIG. 2, a direct link (represented by the dashed line in FIG. 2) between a transmission station (tSTA) (also be referred to as a source station (sSTA)) and a destination station (dSTA) may present a low signal-to-noise ratio. Therefore, in some cases, the direct link may struggle to support ideal modulation and coding schemes (MCS) or throughput. A high-quality link between the relay station and both the tSTA and the destination station allows the rSTA to decode and retransmit physical layer protocol data units (PPDUs). Therefore, the relay station can extend the area for medium to low signal-to-noise ratio regions and can also increase throughput. Based on this, the relay can improve the rate-vs-range (RvR) ratio.

Potential design requirements for relay technologies in some communication technologies (e.g. UHR) may include: improving multi-hop channel access latency (e.g., TXOP sharing enhancement); enhancing end-to-end Quality of Service (QoS) (e.g., end-to-end block acknowledge (BA)/acknowledge (ACK) protocol); simplifying relay protocols to reduce the complexity of relay processing (e.g., single-user relaying, simpler relay signaling, no encryption/decryption, reduced relay packet processing delay); and achieving low-cost design (e.g., allowing non-AP STA/AP to support relaying (which is much simpler than multi-AP protocols)).

T**o** f**a**c**ilitate** u**n**derstanding, terms related to relaying are described as follows.

### Relay station

It is proposed to consider a deployment of two types of relay STAs for some technologies. The type of relay STA can be distinguished based on whether the STA has AP function. A first-type relay STA can have AP function, that is, it can act as an AP and perform independent scheduling. The second-type relay STA does not have AP function and may be scheduled by an AP, that is, it can act as a non-AP STA.

Characteristics of the first-type relay STA may include: flexible but more complex relay operation; support for the same or different operating channel widths; and the requirement for a highly complex AP to apply appropriate transmission parameters (e.g., orthogonal frequency division multiple access (OFDMA) scheduling, beamforming, etc.) due to the first-type relay STA's capability for independent scheduling.

Characteristics of the second-type relay STA may include: AP-announced support for relay operations via management frames such as beacon frames; definition of the relay STA based on its capabilities during association with the AP; and potential need for new signaling design to compose the transmit (TX) and receive (RX) parameters for relay operations.

### Relay processing

In relay processing, two methods can be considered. The two methods are: amplify and forward (AF), and decode and forward (DF).

Based on AF, the relay STA can amplify a signal and forward it to the destination station. Therefore, AF is a very simple method. However, since the AP also transmits amplified noise, AF may cause a decrease in communication performance.

DF can decode a received signal and re-encode the decoded signal for transmission. Compared to AF, DF may have higher complexity and introduce additional delay due to demodulation/modulation and decoding/encoding operations. Therefore, DF is more suitable for transmissions with lower delay sensitivity. However, DF can prevent performance degradation caused by inter-cell interference and noise amplification, and can improve signal quality through error correction. Furthermore, DF can adjust the appropriate per-channel MCS between the relay STA and the non-AP STA, thereby improving RvR.

Frame exchange based on MAC relay

FIG. 3 is an example diagram showing a frame exchange procedure based on MAC relay.

In FIG. 3, relay TXOP protection/sharing may be accomplished by exchanging an MAC control frame (e.g., a multi-user (MU-) request to send (RTS)/clear to send (CTS) frame) between the tSTA, the rSTA, and the destination station.

As illustrated in FIG. 3, the frame exchange procedure based on MAC relay may include steps S310 to S350.

In S310, tSTA may transmit a first hop frame (1st hop frame) to rSTA.

In S320, the rSTA may respond with a first hop BA frame (or an ACK frame).

In S330, after successfully receiving a MAC protocol data unit (MPDU) in the first hop frame, the rSTA may transmit a second hop frame to the destination station.

In S340, the destination station may transmit a second hop BA frame (or an ACK frame).

In S350, the rSTA may transmit an end-to-end (E2E) BA frame (or an ACK frame) to the tSTA.

Before step S310, the tSTA, rSTA and the destination station can perform frame exchange for relay TXOP protection.

### S1G relay

Taking S1G relay as an example, relay-based communication technology is described as follows.

S1G relay is a mechanism for extending the coverage of an AP, where the AP may be referred to as a root AP. An S1G relay device consists of an S1G relay AP and an S1G relay STA. The S1G relay STA is a non-AP STA associated with the root AP or an S1G relay AP of another relay. The S1G relay AP is an AP that provides relay function for its associated non-AP STAs, indirectly providing access to a distribution system (DS) to the root AP via a path of the S1G relay STA. The relay functionality enables local reception or selective forwarding of MSDUs between the S1G relay STA and the S1G relay AP based on a destination address. An S1G relay device can forward frames between the STA associated with its S1G relay AP and the AP associated with its S1G relay STA.

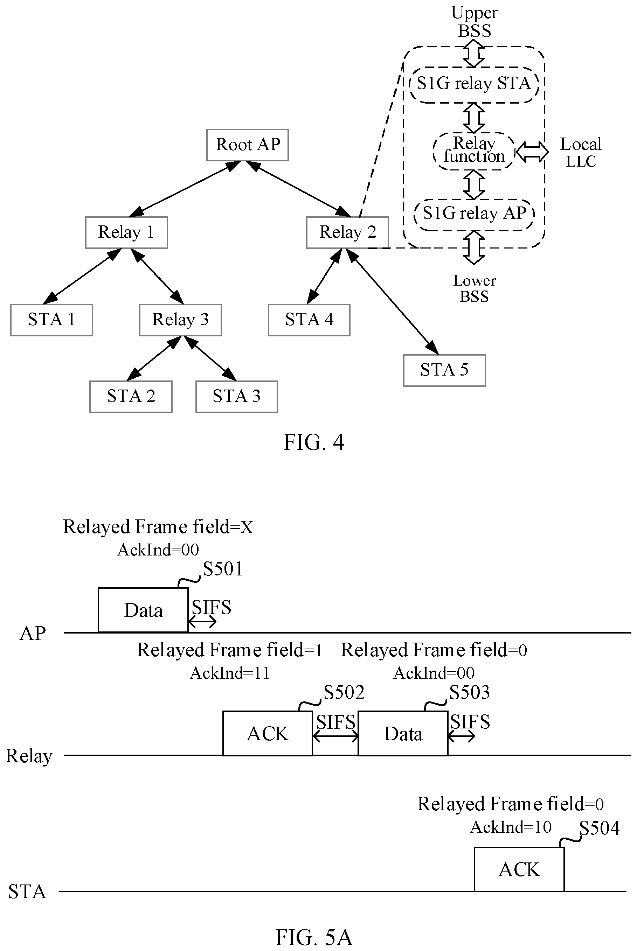

FIG. 4 is an example diagram showing the S1G relay architecture. As illustrated in FIG. 4, the coverage of Root AP is extended through Relay 1, Relay 2 and Relay 3, which enables Root AP to communicate with STA1, STA2, STA3, STA4 and STA5. Taking Relay 2 as an example of an S1G relay device, Relay 2 includes an S1G relay STA and an S1G relay AP. The S1G relay STA interacts with the S1G relay AP through a relay function. The relay function can be implemented through local logic link control (local LLC). The S1G relay STA belongs to an upper (or uplink) basic service set (upper BSS). The S1G relay AP belongs to a lower (or downlink) BSS (lower BSS).

TXOP sharing in S1G relay

If the S1G relay STA and S1G relay AP operates on different primary channels during a TXOP, the S1G relay device should not perform TXOP sharing. An S1G relay device performing TXOP sharing should use a channel width equal to or narrower than the channel width indicated by the STA that initiates the TXOP. During relay TXOP sharing, the frame sequence exchanged on the first hop and the second hop depends on the ACK procedure used by the S1G relay.

When the S1G relay (either an S1G relay STA or an S1G relay AP) receives a valid PV1 QoS data frame with the Relayed Frame field in the Frame Control field equal to 1, the S1G relay may acknowledge the received PV1 QoS data frame using either an implicit or explicit ACK procedure. If the Relayed Frame field in the Frame Control field of a received PV1 QoS data frame is equal to 0, the S1G relay will not acknowledge the received PV1 QoS data frame using an implicit or explicit ACK procedure.

To initiate a relay TXOP sharing, a non-AP STA can transmit a PV1 QoS data frame with the Relayed Frame field set to 1 to an S1G relay AP. Alternatively, the AP may transmit a PV1 QoS data frame with the Relayed Frame field set to 1 to the S1G relay STA. To use the explicit ACK procedure, an S1G relay AP or an S1G relay STA addressed by an RTS frame should respond with an NDP CTS frame in which the Duration field setting is determined based on the relay TXOP sharing protection mechanism.

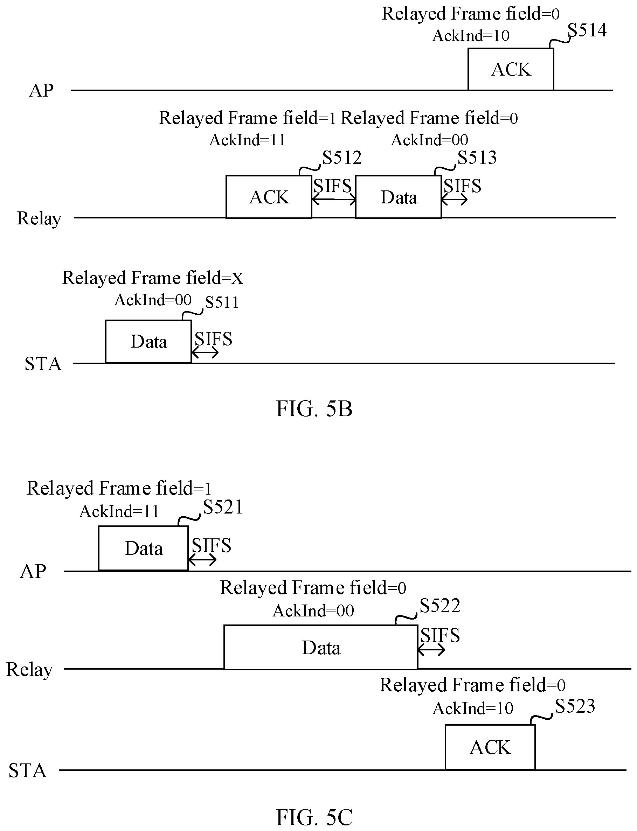

The explicit ACK procedure is described below with reference to FIGs. 5A and 5B.

FIG. 5A is an example diagram showing a downlink relay transmission procedure based on explicit acknowledge. The method illustrated in FIG. 5A may include steps S501 to S504.

In step S501, an AP transmits a downlink data frame.

The downlink data frame may be a PV1 QoS data frame. In the downlink data frame, the Relayed Frame field is set to X, and the ACK policy indicator (ACKInd) is set to 00, to enable the relay transmission of the data frame.

In step S502, an S1G relay STA transmits an NDP ACK frame to the AP. The S1G relay STA or S1G relay AP may also set the ACK policy indicator to 11 for the next transmitted frame.

In the data frame transmitted in step S503, the Relayed Frame field is set to 0.

In step S503, after a short interframe space (SIFS) time following step S502, the S1G relay AP forwards the downlink data frame received in step S501 to the STA. In addition, the S1G relay AP may employ protection mechanisms such as RTS/CTS exchange to protect the forwarded data frame.

The S1G relay AP may employ different MCSs for data transmission and set the ACK policy indicator to 00. Data with different MCSs can be transmitted multiple times through relay buffered frames until successful transmission or until the retry limit is reached.

In step S504, upon receiving the data frame transmitted in step S503, the STA transmits an NDP ACK frame to the S1G relay AP.

The S1G relay STA should issue a no-response indication to terminate the relay TXOP sharing.

FIG. 5B is an example diagram showing an uplink relay transmission procedure based on explicit acknowledge. The method illustrated in FIG. 5B may include steps S511 to S514.

In step S511, a STA transmits an uplink data frame.

The uplink data frame may be a PV1 QoS data frame. In the uplink data frame, the Relayed Frame field is set to X, and the ACK policy indicator is set to 00, to enable the relay transmission of the data frame.

In step S512, an S1G relay AP transmits an NDP ACK frame to the STA. The S1G relay AP or S1G relay STA may also set the ACK policy indicator to 11 for the next transmitted frame.

In step S513, after a SIFS time following step S512, the S1G relay STA forwards the uplink data frame received in step S511 to the AP. In addition, the S1G relay STA may employ protection mechanisms such as RTS/CTS exchange to protect the forwarded data frame.

The S1G relay STA may employ different MCSs for data transmission and set the ACK policy indicator to 00. Data with different MCSs may be transmitted multiple times through relay buffered frame until successful transmission or until the retry limit is reached.

In the data frame transmitted in step S513, the Relayed Frame field is set to 0.

In step S514, upon receiving the data frame transmitted in step S513, the AP transmits an NDP ACK frame to the S1G relay AP.

After receiving the ACK, the STA can delete the data frame from the buffer and defer for MAX_PPDU+ACK+2×SIFS before the next event. Here, MAX_PPDU is the maximum time duration of a PPDU, ACK is the time duration of an ACK frame, and SIFS is the time duration of a SIFS.

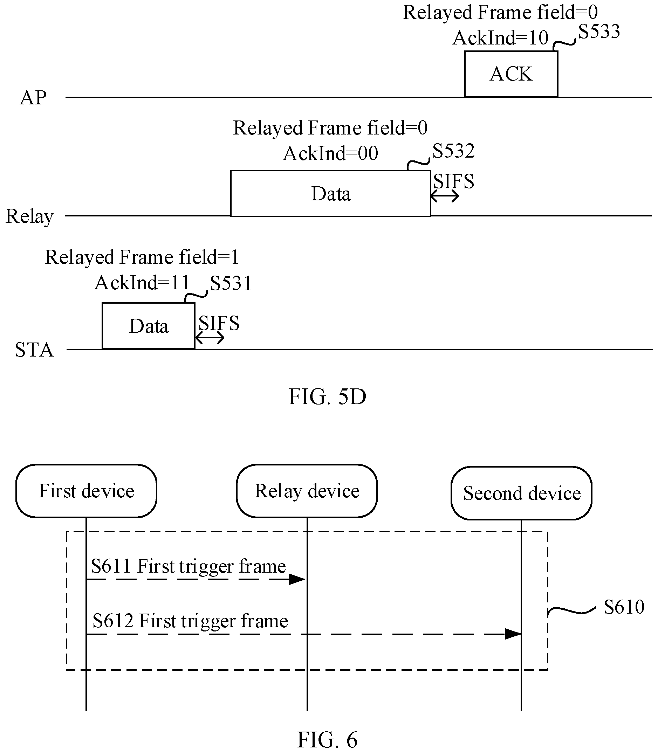

The implicit ACK procedure is described below with reference to FIGs. 5C and 5D.

FIG. 5C is an example diagram showing a downlink relay transmission procedure based on implicit acknowledge. The method illustrated in FIG. 5C may include steps S521 to S523.

In step S521, an AP transmits a downlink data frame.

The uplink data frame may be a PV1 QoS data frame. In the downlink data frame, the Relayed Frame field is set to 1, and the ACK policy indicator is set to 11, to enable the relay transmission of the data frame. If the ACK policy indicator is set to 11, other STAs may expect another data frame to follow.

In step S522, if an S1G relay (either an S1G relay STA or an S1G relay AP), as the intended receiver of an S1G RTS frame, intends to use the implicit ACK procedure, it should respond with an NDP CTS frame including a Duration field to comply with regulations of the relay TXOP sharing protection mechanism. When the S1G relay receives a PV1 QoS data frame during the relay TXOP sharing, the S1G relay may directly forward the received frame without returning an acknowledge frame to the transmitter of the frame. If the PV1 QoS data frame is preceded by an RTS frame, then the S1G relay should transmit an RTS frame to the intended receiver to protect the forwarded frame according to the regulations of the relay TXOP sharing protection mechanism.

The S1G relay may employ different MCSs for data transmission and set the ACK policy indicator to 00. Data with different MCSs can be transmitted multiple times through relay buffered frames until successful transmission or until the retry limit is reached.

In step S522, the Relayed Frame field in the transmitted data frame is set to 0.

In step S523, upon receiving the data frame, the STA responds with an ACK frame. In the ACK frame, the Relayed Frame field may be set to 0, and the ACK policy indicator may be set to 10.

FIG. 5D is an example diagram showing an uplink relay transmission procedure based on implicit acknowledge. The method illustrated in FIG. 5D may include steps S531 to S533.

In step S531, a STA transmits an uplink data frame.

The uplink data frame may be a PV1 QoS data frame. In the uplink data frame, the Relayed Frame field is set to 1, and the ACK policy indicator is set to 11, to enable the relay transmission of the data frame. If the ACK policy indicator is set to 11, other STAs may expect another data frame to follow.

Within a SIFS time following step S531, the STA receives a Physical Layer (PHY) SIG field with the ACK policy indicator set to 00, and checks the next-hop partial association identifier (PAID) of the PHY SIG field.

In step S532, if an S1G relay (either an S1G relay STA or ab S1G relay AP), as the intended receiver of an S1G RTS frame, intends to use the implicit ACK procedure, it should respond with an NDP CTS frame including a Duration field to comply with regulations of the relay TXOP sharing protection mechanism. When the S1G relay receives the PV1 QoS data frame during the relay TXOP sharing, the S1G relay may directly forward the received frame without returning an acknowledge frame to the transmitter of the frame. If the PV1 QoS data frame is preceded by an RTS frame, then the S1G relay should transmit an RTS frame to the intended receiver to protect the forwarded frame according to the regulations of the relay TXOP sharing protection mechanism.

The S1G relay may employ different MCSs for data transmission and set the ACK policy indicator to 00. Data with different MCSs can be transmitted multiple times through relay buffered frames until successful transmission or until the retry limit is reached.

In the data frame transmitted in step S532, the Relayed Frame field is set to 0.

In step S523, upon receiving the data frame, the STA feeds back an ACK frame. In the ACK frame, the Relayed Frame field may be set to 0, and the ACK policy indicator may be set to 10.

To accommodate the two different types of transmission-from AP to relay STA and from relay STA to non-AP STA-the establishment of a relay-based TXOP sharing may be considered.

It should be noted that the channel status differs for the two transmissions: from AP to relay transmission and from relay to non-AP STA. Therefore, to enable efficient transmission, the status of each channel should be measured.

The TXOP for relay transmission may be configured for the case of considering all transmissions, or for the case of considering only certain transmissions. For example, the TXOP for relay transmission can be configured for the transmission from relay STA to non-AP STA.

The present application proposes a triggered TXOP sharing method.

FIG. 6 is a schematic flowchart of a wireless communication method provided in the embodiments of the present application. The method illustrated in FIG. 6 may be performed by a first device, a relay device, and a second device.

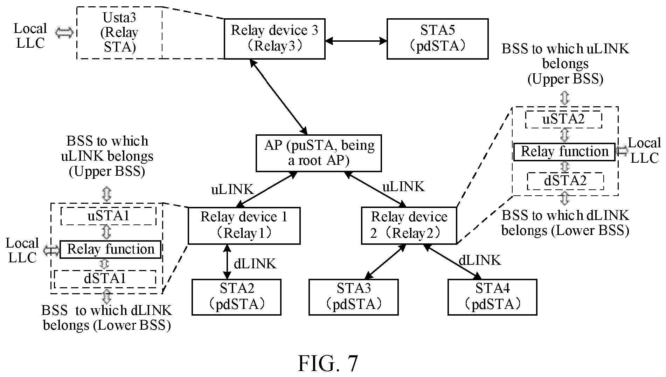

The first device, the second device, and the relay device may all belong to a relay-based network architecture. To facilitate understanding, a relay-based network architecture to which the present application is applicable will be described below with reference to FIG. 7.

The relay-based network architecture may be implemented based on a relay entity. The relay entity may also be referred to as a relay, a relay device, a relay node, etc.

One or more devices may be affiliated with a relay device. When a relay device has at least two affiliated devices, the type of the relay device may be a first type. When a relay device has one affiliated device, the type of the relay device may be a second type. As illustrated in FIG. 7, Relay Device 1 and Relay Device 2 each have two affiliated devices. Therefore, both Relay Device 1 and Relay Device 2 belong to the first type. Relay Device 3 has one affiliated device, therefore, Relay Device 3 belongs to the second type. Examples of these two types of relay devices are provided below.

The at least two stations affiliated with the first-type relay device correspond to an uplink (uLINK) and a downlink (dLINK), respectively. One of the at least two stations (denoted as uSTA) is connected to the AP it is associated with (which provides access to distributed system services (DSSs) and may be referred to as the root AP) on the uplink via a wireless medium (WM). Alternatively, the uSTA may be connected to a P2P peer device on the uplink by means of a P2P link via a WM, and the P2P peer device is associated with a root AP that provides access to distributed services (DSSs). In the present application, the associated AP or P2P peer device of the uSTA may be denoted as puSTA (i.e., the peer STA of uSTA on the uplink). The other station affiliated with the relay device (denoted as dSTA) may be connected to the station it is associated with on the downlink via a WM by implementing AP functions. Alternatively, the dSTA may act as of a P2P station and connect to a P2P peer device on the downlink through a P2P link. The station or P2P peer device associated with the dSTA may be denoted as pdSTA (i.e., the peer STA of the dSTA on the downlink). A relay device provides relay functions to enable communication and data exchange between the puSTA and pdSTA. The uplink (uLINK) and downlink (dLINK) of a relay device may operate on operating channels in the same or different frequency bands and may use the same or different operating parameters.

It should be noted that the types of the dSTA and uSTA are not limited in the present application. For example, the uSTA may be either an AP or a non-AP STA. As another example, the dSTA may be either an AP or a non-AP STA.

For the second-type relay device, the single affiliated station of the relay device is connected to the AP it is associated with (which provides access to distributed system services (DSSs) and is referred to as the root AP) via a WM. Alternatively, this single station is connected to a P2P peer device by means of a P2P link via a WM, and the P2P peer device is associated with a root AP that provides access to distributed services (DSSs). The root AP or the peer device associated with the root AP mentioned above may be denoted as puSTA. In addition, the single affiliated station of the relay device is also connected to the pdSTA via a WM. Based on this architecture, the relay device can provide relay functions to enable communication and data exchange between the puSTA and pdSTA. It should be understood that, for the second-type relay device, its uplink (uLINK) and downlink (dLINK) can operate within the same basic service set (BSS). For ease of description, the single affiliated station of the second-type relay device may be referred to as uSTA.

The first device may include the holder of a TXOP. For example, the first device may include an AP. The AP may be an AP that provides DS access service, that is, the root AP mentioned above. Alternatively, the first device may include the puSTA.

The first device can communicate with the second device via the relay device. The relay device may include a device associated with the first device. The second device may include a peer device of the relay device. Alternatively, the second device may include a peer device of the device associated with the first device. The peer device mentioned here may be a station that has established a connection with the device associated with the first device. For example, the peer device may be a peer STA of the device associated with the first device, that is, a station that establishes a P2P connection with the device associated with the first device. Alternatively, the peer device may include a device associated with the relay device.

For example, the relay device may include a uSTA or a dSTA. As another example, the relay device may include a relay AP or a relay non-AP STA. As yet another example, the second device may include a pdSTA.

The method illustrated in FIG. 6 is described in detail below. The method illustrated in FIG. 6 may include step S610.

In step S610, a first device transmits a first trigger frame.

Exemplarily, step S610 may include step S611 and/or step S612.

In step S611, the first device transmits the first trigger frame to a relay device.

In step S612, the first device transmits the first trigger frame to a second device.

The first trigger frame may be used to indicate sharing of first resources within an obtained transmission opportunity (TXOP) by the first device with the relay device and/or the second device for frame exchange between the first device and the second device.

For example, the relay device can communicate with the first device and/or the second device through the first resources, so as to achieve a relay-based communication between the first device and the second device. The second device may be a peer device of the relay device. For example, the second device may include the peer device of the relay device. The second device can communicate with the relay device through the first resources, so as to achieve the relay-based communication between the first device and the second device.

It can be understood from the above that the second device and/or relay device may be target stations of the relay-based TXOP sharing performed by the first device. In other words, under certain conditions, the second device and/or relay device are capable of responding to the TXOP sharing and transmitting signals over the first resources within the shared TXOP. Therefore, the second device and/or relay device may also be referred to as a target station.

It should be noted that a target of TXOP sharing (i.e., the target station with which the TXOP is shared) may be one or multiple. In other words, the first device may share the obtained TXOP with one or more target stations. The second device may be one of the one or more target stations. The relay device may be the one of one or more target stations.

It should be noted that if the TXOP shared by the first device is obtained, the second device and/or the relay device may transmit one or more data units. A data unit may be, for example, a PPDU. The PPDU may include a non-TB PPDU. In other words, the second device and/or relay device may transmit one or more PPDUs using the first resources. It can be understood that the second device and/or the relay device may initiate PPDU(s) to be transmitted after been being granted a portion of the TXOP, or the first device may initiate PPDU(s) to be transmitted by the second device and/or the relay device.

Exemplarily, the allocated first resources may be used for the transmission of one or more non-TB PPDUs to enable frame exchange between the peer station of the relay and the AP. That is, the peer station of the relay is scheduled to transmit MPDUs to the AP (the destination address of the MPDU is the AP), or the AP is scheduled to transmit MPDUs to the peer station of the relay (the destination address of the MPDU is the peer station of the relay).

It should be noted that the first resources may include time domain resources and/or frequency domain resources. In other words, the first resources may include a portion of time domain resources within the TXOP (i.e., a portion of the time duration of the TXOP) and/or a portion of frequency domain resources within the TXOP (i.e., a portion of the bandwidth occupied by the TXOP).

Based on the first trigger frame, the triggered TXOP sharing procedure can be reused to implement relay-based TXOP sharing. It can be understood that the method proposed by the present application is a relay-based channel access method, i.e., a relay transmission-based TXOP sharing method initiated by the AP.

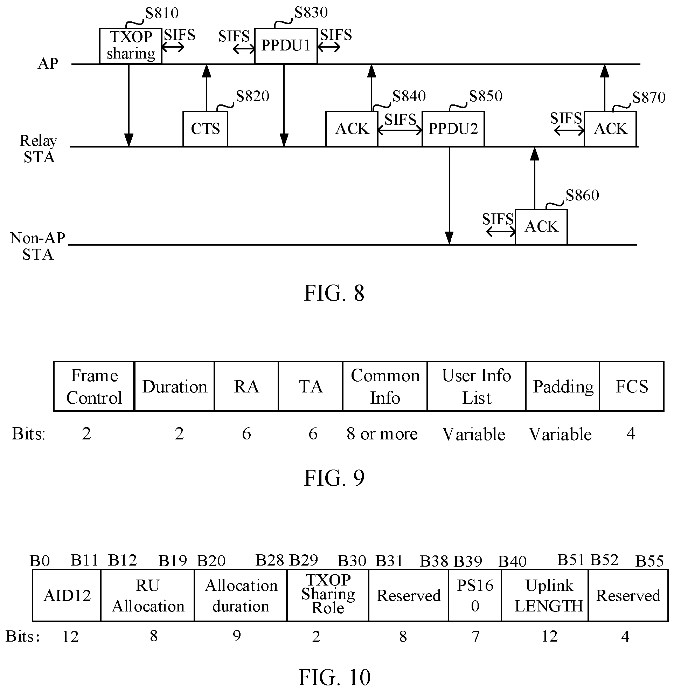

FIG. 8 is an example diagram showing a triggered TXOP sharing procedure. In FIG. 8, the first device may include the AP shown in FIG. 8, and the second device may include the non-AP STA shown in FIG. 8. The relay device may include the relay STA shown in FIG. 8.

In step S810, the AP transmits a TXOP sharing trigger frame to the relay STA.

In step S820, the relay STA transmits a CTS.

In step S830, the AP transmits PPDU1 to the relay STA.

In step S840, the relay STA responds with an ACK frame for PPDU1.

In step S850, the relay STA transmits PPDU2 to the non-AP STA.

In step S860, the non-AP STA feeds back an ACK frame for PPDU2 to the relay STA.

In step S870, after receiving the ACK frame in step S860, the relay STA feeds back an ACK frame to the AP.

The first trigger frame can be used to implement the relay-based TXOP sharing. Therefore, the type of the first trigger frame may be referred to as a relay-based TXOP sharing trigger frame. Taking the first trigger frame as an example, the relay-based TXOP sharing trigger frame is described as follows.

The first trigger frame may adopt a trigger frame format defined by the related art (such as IEEE 802.11). For example, the first trigger frame may adopt the MU-RTS trigger frame format defined in the IEEE 802.11 standard. That is, the first trigger frame may be an MU-RTS TXS trigger frame. In some embodiments, the first trigger frame may update some fields or subfields of the trigger frame format defined by the related art.

FIG. 9 is a schematic diagram showing a format of the first trigger frame provided in the embodiments of the present application. As illustrated in FIG. 9, the first trigger frame may include one or more of following fields: Frame Control, Duration, Receiver Address/Receiving Station Address (RA), Transmitter Address/Transmitting Station Address (TA), Common Information (Common Info), User Information List (User Info List), Padding, and Frame Check Sequence (FCS).

The Frame Control field and the Duration field may respectively adopt the format of the Frame Control field and the duration/ID for QoS STA field in the control frame as defined by the related art (such as IEEE 802.11). The Common Information field may carry common information. The User Information List field may consist of one or more User Information fields (User Info fields). A User Information field is generally used to indicate related information corresponding to a target station. The Padding field may be present in the trigger frame to extend the frame length, which allows the receiving STA to have sufficient time to prepare a response to the PPDU for its transmission after a SIFS interval following reception of the trigger frame.

In some embodiments, the first trigger frame may include a first field. The first field may be used to indicate that a TXOP sharing mode of the first trigger frame is relay-based TXOP sharing. Under the relay-based TXOP sharing mode, a TXOP shared by the first device is used for the first device and the second device to communicate via the relay device. In other words, the first field may indicate that the current trigger frame is a trigger frame that initiates the relay-based TXOP sharing procedure.

Exemplarily, in a case where the first field has a first value, the TXOP sharing mode of the first trigger frame may be a relay-based TXOP sharing mode.

In an example where the first trigger frame adopts the format of the MU-RTS trigger frame defined in the IEEE 802.11 standard, the first field may be, for example, the Triggered TXOP Sharing Mode subfield of an updated Common Information field. If the Trigger Type subfield of the Common Information field in the first trigger frame indicates that the first trigger frame is an MU-RTS trigger frame, and the Triggered TXOP Sharing Mode subfield of the Common Information field is set to a non-zero value, it may be indicated that within the obtained TXOP, the first device allocates a portion of TXOP resources (i.e., the first resources) to the second device and/or the relay device for the transmission of one or more non-TB PPDUs. The allocated first resources may be used for the transmission of one or more non-TB PPDUs to enable frame exchange between the peer station of the relay device (i.e., the second device) and the AP providing DS services (i.e., the first device). The first value may be any value other than 0, 1, or 2. For example, the first value may be 3. The encoding of the Triggered TXOP Sharing Mode subfield may be as shown in Table 1.

**Table 1**

| Triggered TXOP Sharing Mode subfield values | Description |
|---|---|
| 0 | MU-RTS that does not initiate a triggered TXOP sharing procedure |
| 1 | MU-RTS that initiates a triggered TXOP sharing procedure, where a scheduled STA can only transmit MPDUs to its associated AP |
| 2 | MU-RTS that initiates a triggered TXOP sharing procedure, where a scheduled STA can transmit MPDUs to its associated AP or to another STA |
| 3 | MU-RTS that initiates a relay-based triggered TXOP sharing procedure, where the allocated portion of TXOP time domain resources and/or TXOP frequency domain resources are used for transmission of one or more non-TB PPDUs to enable frame exchange between a peer station of a relay and an AP providing DS services, that is, the peer station of the relay is scheduled to transmit MPDUs to the AP, or the AP is scheduled to transmit MPDUs to the peer station of the relay |

In some embodiments, the first device may share a portion of the resources within the obtained TXOP with one or more target stations for relay communication. The portion of resources within the TXOP may include the first resources.

Exemplarily, the first trigger frame may include one or more user information fields (User Info fields), and the one or more user information fields have a one-to-one correspondence with one or more devices. The one or more user information fields are used to indicate sharing of a portion of resources within the obtained TXOP by the first device with the one or more devices for frame exchange between the first device and the second device. For example, the user information fields may be defined using the format of relevant specific subfields of the user information field in the MU-RTS trigger frame.

In some embodiments, the first trigger frame may include a second field, and the second field is used to indicate a target of TXOP sharing. In other words, the second field may indicate the target station(s) of the first trigger frame. For example, the second field may indicate the device identifier of the target station. The second field may be contained in the user information field mentioned above. The second field may be used to indicate the identification information of the target station(s) to which the user information field(s) is addressed.

Exemplarily, the second field may include the AID12 subfield of the User Information field in the MU-RTS trigger frame.

Optionally, in a case where the value of the second field falls within a first range, the target of TXOP sharing (i.e., the target station) may be a device associated with the first device. In a case where the second field includes the AID12 subfield of the user information field in the MU-RTS trigger frame, the first range may be, for example, a range from 1 to 2007. The first range may indicate that the user information field targets an associated non-AP STA whose AID is equal to the value of the AID12 subfield. Particularly, if the BSS to which the target station belongs is the same as the BSS to which the AP sharing the TXOP (i.e., the first device) belongs, the AID of the target station is equal to or corresponds to the value of the AID12 subfield.

In a case where the value of the second field falls within a second range, the target of TXOP sharing may be a relay device. For example, the target device may be a relay AP. Alternatively, in the case where the value of the second field falls within the second range, the second device may be a peer device of a relay device, and the BSS to which the target of TXOP sharing belongs differs from the BSS to which the first device belongs. In a case where the second field includes the AID12 subfield of the User Information field in the MU-RTS trigger frame, the second range may be, for example, a range from 2008 to N, where N may be greater than 2008 and less than 2044. N may be predefined or configurable. For example, N may be 2028.

Table 2 shows an example encoding of the AID12 subfield of the User Information field in the MU-RTS trigger frame provided in the embodiments of the present application.

**Table 2**

| AID12 subfield | Description |
|---|---|
| 0 | User Information field allocates one or more contiguous RA-RUs for associated STA(s) |
| 1-2007 | User Information field targets an associated non-AP STA whose AID is equal to the value of the AID12 subfield; particularly, when the BSS to which the target station belongs is the same as the BSS to which the AP sharing the TXOP belongs, the AID of the target station is equal to or corresponds to the value of the AID12 subfield |
| 2008-N | User Information field is addressed to a relay AP or a peer station of the relay, and the BSS to which the relay AP or the peer station belongs is not the same as the BSS to which the AP sharing the TXOP belongs. The AID of the relay AP or the peer station of the relay is equal to or corresponds to the value of the AID12 subfield |
| N-2044 | Reserved |
| 2045 | User Information field allocates one or more contiguous RA-RUs for associated STA(s) |
| 2046 | Unallocated RU |
| 2047-4094 | Reserved |
| 4095 | Disallowed in a User Information field as it indicates the start of the Padding field |

In some embodiments, the first resources may include first frequency domain resources. The first trigger frame includes a third field. The third field may be used to indicate information about the first frequency domain resources. Since the third field indicates frequency domain resources, it may also be referred to as a frequency domain resource field. The third field may be contained in the user information field mentioned above.

Exemplarily, the third field may be a Resource Unit Allocation (RU Allocation) subfield of the User Information field (User Info field) in the MU-RTS trigger frame. The Resource Unit Allocation subfield may be used to indicate that a PPDU carrying a CTS frame and/or a PPDU carrying an MPDU that needs to be forwarded via relaying (or that is forwarded via a relay) is transmitted on the 20 MHz primary channel, 40 MHz primary channel, 80 MHz primary channel, 160 MHz primary channel, 80+80 MHz (HE only) or 320 MHz primary channel of the BSS to which the target station belongs.

In some embodiments, the first resources may include first time domain resources. The first trigger frame may include a fourth field. The fourth field may be used to indicate information about the first time domain resources. Since the fourth field indicates the time domain resources, it may also be referred to as a time domain resource field. The fourth field may be contained in the user information field mentioned above.

Exemplarily, the fourth field may be the Allocation Duration subfield of the User Information field (User Info field) in the MU-RTS trigger frame. The Allocation Duration subfield may represent the time duration allocated to the target station for relay-based PPDU transmission within the TXOP obtained by the AP. The time unit for this relay-based PPDU transmission may be 16 microseconds (µs).

In some embodiments, the first trigger frame may include a fifth field. The fifth field may be used to indicate a TXOP sharing role of the target station. Alternatively, the TXOP sharing role may also be referred to as a sharing type. Therefore, the fifth field may also be referred to as a TXOP Sharing Role field or a TXOP Sharing Type field. The fifth field may be contained in the user information field mentioned above.

Exemplarily, the fifth field may be used to indicate one or more of the following: the second device is a receiver of a data unit initiated by the first device; the second device is a transmitter of a data unit that needs to be forwarded via relaying; the second device is a relay device configured to forward data units; and the second device needs to share a portion of the first resources with a peer device of the second device. The data unit(s) may be, for example, MPDU(s).

In a case where a data unit is an MPDU, the TXOP Sharing Role subfield may be used to indicate: that the target station is an initiator of MPDU(s) that need to be forwarded via relaying (which refers to the source address of the MPDU(s), i.e., the target station), or that the target station is a relay station configured to forward MPDU(s), or that the target station is a station that needs to further share the shared portion of TXOP frequency domain resources and time domain resources with the peer station of the relay.

For example, the encoding of the fifth field may be as shown in Table 3.

**Table 3**

| TXOP Sharing Role subfield values | Description |
|---|---|
| 0 | Destination station is a receiver of SU PPDU or MU PPDU transmission (including PPDU carrying MPDU(s) that need to be forwarded via relaying) initiated by the AP |
| 1 | Target station is a transmitter of MPDU(s) that need to be forwarded via relaying (which refers to the source address of the MPDU(s), i.e., the target station) |
| 2 | Target station is a relay station configured to forward MPDU(s) |
| 3 | Target station is a station that needs to further share the shared portion of TXOP frequency domain resources and time domain resources with the peer station of the relay |

It should be noted that some of the items in Table 3 may be implemented independently. In other words, the contents in Table 3 may be modified by deletion, addition, or alteration.

In some embodiments, the first trigger frame may include a sixth field. The sixth field may be used to indicate a length of an uplink or downlink PPDU for relay communication of the second device. For example, the sixth field may be used to indicate the length of a PPDU which carries a MPDU that needs to be forwarded via relaying (or that is forwarded via a relay) in the uplink or downlink direction. For example, the sixth field may take the value of the L-SIG LENGTH field of the PPDU.

Since the sixth field indicates the length of the uplink or downlink PPDU, the sixth field may also be referred to as the uplink length (UL length) and/or downlink length field.

For example, the sixth field may be contained in the user information field as described above. For example, the format of the sixth field may be defined by referring to the format defined for the Uplink Length subfield of the User Information field in the MU-RTS trigger frame.

FIG. 10 is a schematic diagram showing a format of the user information field in the first trigger frame provided in the embodiments of the present application. The format of the user information field illustrated in FIG. 10 is defined using the related subfields of the User Information field in the MU-RTS trigger frame.

As illustrated in FIG. 10, the user information field may include one or more of the following subfields: AID12, RU Allocation, Allocation Duration, TXOP Sharing Role, PS160, Uplink LENGTH, and Reserved.

The RU Allocation subfield is used to indicate operating channel information, within the BSS to which the target station belongs, for the transmission of a PPDU carrying a CTS frame and/or a PPDU carrying an MPDU that needs to be forwarded via relaying (or that is forwarded via a relay).

The Allocation Duration subfield is used to indicate the time duration allocated to the target station for relay-based PPDU transmission within the TXOP obtained by the AP.

The TXOP Sharing Role (or TXOP Sharing Type) field is used to indicate that the target station is an initiator of MPDU(s) that needs to be forwarded via relaying (which refers to the source address of the MPDU(s), i.e., the target station), or that the target station is a relay station configured to forward MPDU(s), or that the target station is a station that needs to further share the shared portion of TXOP frequency domain resources and time domain resources with the peer station of the relay.

The Uplink Length field is used to indicate the length of a PPDU that carries a MPDU that needs to be forwarded via relaying (or that is forwarded via a relay) in the uplink direction. For example, the Uplink Length field may have the value of the L-SIG LENGTH field of the PPDU.

In some embodiments, the first trigger frame may be used to trigger the relay device to transmit a second trigger frame to a second device (e.g., a peer device of the relay device). The second trigger frame may be used to share a portion of the first resources with the second device for relay communication.

Exemplarily, after receiving the first trigger frame, the relay device may transmit a second trigger frame to the second device within the time period corresponding to the first resources indicated by the first trigger frame. The second trigger frame may be used to share a portion of the first resources with the second device. The second device may transmit PPDUs on a portion of the first resources. For example, the first trigger frame may indicate in a user information field that the TXOP sharing role of the relay device "needs to further share the shared portion of TXOP frequency domain resources and time domain resources with the peer station of the relay". Optionally, the first trigger frame may indicate in another user information field that the TXOP sharing role of the relay device is "a relay station configured to forward the MPDU(s)". After receiving the first trigger frame, the relay device may determine whether to transmit the second trigger frame to the second device based on the TXOP sharing role indicated by the first trigger frame.

Optionally, the type of the second trigger frame may also be a relay-based TXOP sharing trigger frame. The TXOP sharing mode of the second trigger frame may be the same as the TXOP sharing mode of the first trigger frame. For example, the TXOP sharing modes of both the first and second trigger frames may be the relay-based trigger TXOP sharing mode. For example, the value of the Triggered TXOP Sharing Mode subfield in the second trigger frame is a first value (e.g., 3 as shown in Table 1).

The link between the relay device and the first device is a first link, and a link between the relay device and the second device is a second link. A BSS to which the first link belongs may be the same as or different from a BSS to which the second link belongs. For example, if a relay device has only one affiliated device, the BSS to which the first link belongs may be the same as the BSS to which the second link belongs. As another example, if the relay device has the affiliated uSTA and dSTA, the BSS to which the first link belongs may be different from the BSS to which the second link belongs. The first link may be an uplink, and the second link may be a downlink. In other words, the BSS to which the uplink belongs and the BSS to which the downlink belongs can be different.

It should be noted that a primary channel of the first link may be the same or different from a primary channel of the BSS to which the second link belongs.

The first device may share frequency domain resources with the relay device based on the status of the primary channel of the BSS to which the first link belongs and/or the status of the BSS to which the second link belongs. The first device may share frequency domain resources with the second device based on the status of the primary channel of the BSS to which the second link belongs. For example, for the second device, the first resources may include the frequency domain resources corresponding to the primary channel of the BSS to which the second link belongs. For the relay device, the first resources may include the frequency domain resources corresponding to the primary channel of the BSS to which the first link belongs and/or the BSS to which the second link belongs.

For example, the operating channels (for operation) of the BSS to which the first link belongs include C1 and C2, with C1 being the primary channel. and the operating channels (for operation) of the BSS to which the second link belongs include C1 and C2, with C2 being the primary channel. Meanwhile, C1 and C2 are both operation channel sets, the first device is connected with the relay device via the first link, and the second device is connected with the relay device via the second link, In this case, the first device is capable of obtaining a TXOP on C1 and C2, and the first device may allocate C2 to the second device.

Therefore, it can be seen that the technical solution proposed in the present application can implement the relay-based TXOP sharing not only in the case where the primary channels are the same, but also in the case where the primary channels are different. As mentioned above, S1G relay operation specifies that the S1G relay STA and S1G relay AP must operate on the same primary channel, which limits the relay operation scenarios. In comparison, the relay operation scenarios in the present application is not limited to the primary channel, thereby enabling more flexible relay operation with widely applicable scenarios.

In some embodiments, in a case where the primary channel of the BSS to which the first link belongs is different from the primary channel of the BSS to which the second link belongs, when the relay device perform frame exchange with the second device within the time period corresponding to the shared TXOP, the first device is capable of performing frame exchange with the relay device. In other words, within the time period corresponding to the shared TXOP, not only the relay device and/or the second device is capable of performing communication, but the first device is also capable of performing communication. For example, within the time period corresponding to the first resources, the relay device may exchange PPDUs with both the first device and the second device.

It should be noted that a PPDU received by the relay device on the first link is a first PPDU, and a PPDU received by the relay device on the second link is a second PPDU. The end time of the first PPDU needs to be aligned with the end time of the second PPDU. This requirement stems from the need of avoiding interference caused by the relay device's synchronous transmission and reception on two links in the scenario where the relay device is a device not supporting synchronous transmit and receive (STR) on two links. For example, in the case where the first link is an uplink and the second link is a downlink, the end time of a PPDU received by the relay device on the uplink needs to be aligned with the end time of a PPDU received on the downlink.

In some embodiments, if the first device has an unallocated portion of frequency domain resources within the shared portion of the TXOP time duration of the obtained TXOP, the first device may trigger uplink or downlink transmission with station(s) associated with the first device on the unallocated portion of frequency domain resources. The unallocated portion of frequency domain resources may include a portion of the bandwidth occupied by the TXOP obtained by the first device. In other words, the first device can allocate a portion of the frequency domain resources within the obtained TXOP to the second device, enabling the second device to perform data transmission; and the first device can also use the remaining portion of frequency domain resources within the obtained TXOP to implement data transmission between itself and its associated devices (such as the relay device). It can be understood that the station(s) associated with the first device may include the relay device associated with the first device. In other words, the first device may communicate with the relay device based on the unallocated portion of frequency domain resources within the TXOP.

It should be noted that the uplink or downlink transmission with the station associated with the first device, which is triggered by the first device on the unallocated portion of frequency domain resources, may include: uplink or downlink SU PPDU transmission, or uplink or downlink MU PPDU transmission. Additionally, the uplink or downlink transmission may include the transmission of a downlink SU PPDU or MU PPDU of a MPDU that needs to be forwarded via relaying, to enable frame exchange between the peer station of the relay and the AP providing DS services.

Regarding the unallocated portion of frequency domain resources, the first device may trigger uplink or downlink transmission between the first device and the station(s) associated with the first device based on the first trigger frame. In other words, the first trigger frame may be used not only to trigger relay-based TXOP sharing, but also to trigger data transmission with the station(s) associated with the first device. The first trigger frame may trigger corresponding communication procedures through different user information fields. For example, a user information field included in the first trigger frame may be used to trigger a relay-based TXOP sharing for the second device, and another user information field included in the first trigger frame may be used to trigger communication between the first device and devices associated with the first device.

For example, the operating channels (for operation) of the BSS to which the first link belongs include C1 and C2, with C1 being the primary channel. and the operating channels (for operation) of the BSS to which the second link belongs include C1 and C2, with C2 being the primary channel. Meanwhile, C1 and C2 are both operation channel sets, the first device is connected with the relay device via the first link, and the second device is connected with the relay device via the second link, In this case, the first device is capable of obtaining a TXOP on C1 and C2, and the first device may allocate C2 to the second device. Therefore, within the time duration of the TXOP obtained by the first device, there remains an unallocated frequency domain resource C1. Thus, the first device can perform uplink or downlink transmissions with station(s) associated with the first device on C1.

The technical solutions provided in the present application will be described in detail below through Embodiments 1 to 4.

### Embodiment 1

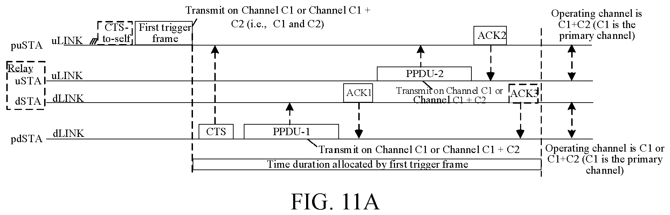

Embodiment 1 provides a method for a puSTA to directly share an obtained TXOP with a pdSTA. In Embodiment 1, the primary channel of the BSS to which the first link belongs is the same as the primary channel of the BSS to which the second link belongs. FIG. 11A is a schematic flowchart of a communication method provided in Embodiment 1. In FIG. 11A, the relay device has two affiliated devices. These two devices are a uSTA and a dSTA.

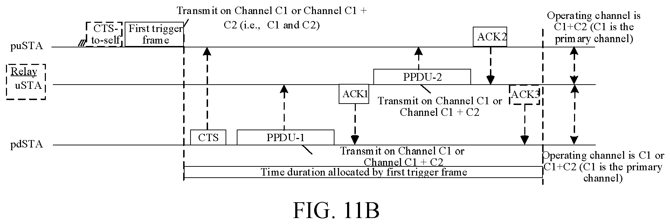

FIG. 11B is a schematic flowchart of another communication method provided in Embodiment 1. In FIG. 11B, the relay device has only one affiliated device, and the device may be referred to as a uSTA.

As illustrated in FIG. 11A, the operating channels (for operation) of the BSS to which the uplink belongs include C1 and C2 (where C1 and C2 are operating channel sets), and C1 is the primary channel; and the operating channels (for operation) of the BSS to which the downlink belongs include C1, or C1 and C2 (i.e., C1+C2), and C1 is the primary channel. As illustrated in FIG. 11B, the uSTA and pdSTA operate within the same BSS.

As illustrated in FIG. 11A or FIG. 11B, the puSTA obtains a TXOP on Channel C1+C2 or Channel C1.

The puSTA may transmit a first trigger frame to initiate a relay-based TXOP sharing. The first trigger frame may be the updated MU-RTS TXS trigger frame as illustrated in FIG. 8. The first trigger frame can indicate the target of TXOP sharing (i.e., the pdSTA).

Exemplarily, a User Information field (User Info field) in the first trigger frame is addressed to the pdSTA (i.e., the target station in the User Info field). The time duration allocated to the pdSTA may be specified in the Allocation Duration subfield in the trigger frame. Optionally, the first trigger frame may indicate that the TXOP sharing role of the pdSTA is "an initiator of MPDU(s) that need to be forwarded via relaying". Optionally, the length value of an uplink PPDU (i.e., PPDU-1 in FIG. 11A or FIG. 11B) transmitted by the pdSTA is indicated in the "Uplink LENGTH (UL Length)" field. Optionally, the channel information for transmitting uplink PPDUs (i.e., the primary channel information for C1 or C1+C2) may be specified in the Resource Unit (RU Allocation) subfield.

Optionally, the puSTA may transmit a CTS-to-self frame before transmitting the first trigger frame.

Optionally, the first trigger frame may indicate in another User Information field that the target of TXOP sharing includes the uSTA (i.e., the target station in the User Information field). Optionally, the time duration allocated to the uSTA for relay forwarding may be specified in the Allocation Duration subfield in the first trigger frame. Optionally, the TXOP sharing role of the uSTA may be specified as "a relay station configured to forward MPDU(s)". Optionally, the "Uplink LENGTH" field may indicate the length value of an uplink PPDU (i.e., PPDU-2 in FIG. 11A or FIG. 11B) transmitted by the uSTA, which carries a to-be-forwarded MPDU. Optionally, the channel information for transmitting uplink PPDUs (i.e., the primary channel information for C1 or C1+C2) may be specified in the Resource Unit (RU Allocation) subfield.

After receiving the first trigger frame, the pdSTA transmits one or more non-TB PPDUs (e.g., including PPDU-1 in FIG. 11A or FIG. 11B) within the time allocation range of the first trigger frame. In one or more non-TB PPDUs, the first PPDU transmitted may carry a CTS frame for acknowledgment. In FIG. 11A, the pdSTA transmits a PPDU (PPDU-1 in FIG. 11A) carrying the frame that needs to be transmitted via relaying to the dSTA. In FIG. 11B, the pdSTA may transmit a PPDU (PPDU-1 in FIG. 11B) carrying a frame that needs to be transmitted via relaying to the uSTA. Optionally, the relay may respond with an ACK frame (i.e., ACK1 in FIG. 11A or FIG. 11B). Subsequently, the relay may transmit PPDU-2 to the puSTA. After receiving PPDU-2, the puSTA may respond with an ACK frame (i.e., ACK2 in FIG. 11A or FIG. 11B). After receiving the ACK2 frame, the relay may respond with an ACK frame (i.e., ACK3 in FIG. 11A or FIG. 11B) for the acknowledgement of reception of the frame by the puSTA. Following this, if there is remaining time in the allocated TXOP, the pdSTA may also initiate relay-based frame exchange.

### Embodiment 2

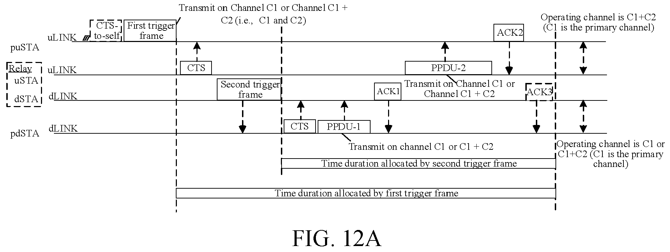

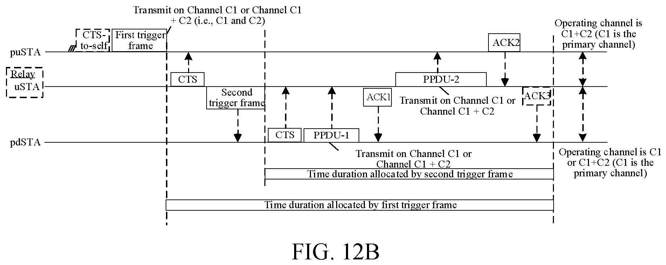

Embodiment 2 provides a method for a puSTA to indirectly share the obtained TXOP with a pdSTA. In Embodiment 2, the primary channel of the BSS to which the first link belongs is the same as the primary channel of the BSS to which the second link belongs. FIG. 12A is a schematic flowchart of a communication method provided in Embodiment 2. In FIG. 12A, the relay device has two affiliated devices. These two devices are a uSTA and a dSTA. FIG. 12B is a schematic flowchart of another communication method provided in Embodiment 2. In FIG. 12B, the relay device has only one affiliated device, and the device may be referred to as a uSTA.

As illustrated in FIG. 12A, the operating channels (for operation) of the BSS to which the uplink belongs include C1 and C2 (where C1 and C2 are operating channel sets), and C1 isg the primary channel; and the operating channels (for operation) of the BSS to which the downlink belongs include C1, or C1 and C2 (i.e., C1+C2). As illustrated in FIG. 12B, the uSTA and the pdSTA operate within the same BSS.

The puSTA obtains a TXOP on Channels C1 and C2 or on Channel C1. The puSTA may transmit a first trigger frame, namely a relay-based TXOP sharing (TXS) sharing trigger frame, to initiate a relay-based TXOP sharing. The first trigger frame may be the updated MU-RTS TXS trigger frame as illustrated in FIG. 8. The first trigger frame can indicate the target of TXOP sharing (i.e., the uSTA).

The User Information field (User Info field) in the first trigger frame is addressed to the uSTA of the relay. The time duration allocated to the relay is specified in the Allocation Duration subfield in the trigger frame. Optionally, the first trigger frame may indicate that the TXOP sharing role of the uSTA is "a station needs to further share the shared portion of TXOP frequency domain resources and time domain resources with the peer station of the relay". Furthermore, as an option, the first trigger frame may indicate in another User Information field (User Info field) that the frame is transmitted to the uSTA (i.e., the target station in the User Info field). Optionally, it is also indicated that uSTA is a "relay station configured to forward MPDU(s)". Optionally, the channel information for transmitting uplink PPDUs (i.e., the primary channel information for C1 or C1+C2) may be specified in the Resource Unit (RU Allocation) subfield.

Optionally, the puSTA may transmit a CTS-to-self frame before transmitting the first trigger frame.

After receiving the first trigger frame, the uSTA of the relay may, within the time allocation range of the first trigger frame, transmit a PPDU carrying a CTS frame for acknowledgement. For a relay that includes a relay AP, the dSTA of the relay may transmit a second trigger frame to initiate a partial TXOP sharing for the pdSTA. For a relay that does not include a relay AP, the uSTA of the relay transmits a second trigger frame to initiate a partial TXOP sharing for the pdSTA. The User Information field (User Info field) in the second trigger frame is addressed to the pdSTA (i.e., the target station in the User Info field). The time duration allocated to the pdSTA may be specified in the Allocation Duration subfield in the second trigger frame. Optionally, the second trigger frame may indicate that the pdSTA is "an initiator of MPDU(s) that need to be forwarded via relaying". Optionally, the second trigger frame may indicate the length value of an uplink PPDU (i.e., PPDU-1 in FIG. 12A or FIG. 12B) transmitted by the pdSTA in the "Uplink LENGTH (UL length)" field. Optionally, the channel information for transmitting uplink PPDUs (i.e., the primary channel information for C1 or C1+C2) may be specified in the Resource Unit (RU allocation) subfield.

After receiving the second trigger frame, the pdSTA transmits one or more non-TB PPDUs to the dSTA within the time allocation range of the second trigger frame. The first PPDU transmitted may carry a CTS frame for acknowledgment. As illustrated in FIG. 12A or FIG. 12B, the pdSTA transmits a PPDU (PPDU-1 in FIG. 12A or FIG. 12B) carrying the frame that needs to be forwarded via relaying to the relay (e.g., dSTA in FIG. 12A). Optionally, the relay may respond with an ACK frame (i.e., ACK1 in FIG. 12A or FIG. 12B). Within the allocated time duration indicated by the second trigger frame, the relay may transmit a PPDU of one or more frames that need to be transmitted via relaying (PPDU-2 in FIG. 12A or FIG. 12B) to the puSTA. After receiving PPDU-2, the puSTA may respond with an ACK frame (i.e., ACK2 in FIG. 12A or FIG. 12B). Optionally, after receiving the ACK2 frame, the relay may respond with an ACK frame (i.e., ACK3 in FIG. 12A or FIG. 12B) to the pdSTA to acknowledge the reception of the frame by the puSTA.

### Embodiment 3

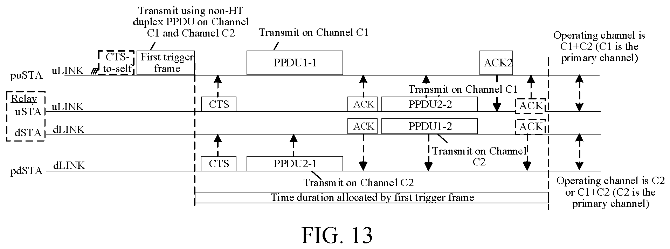

Embodiment 3 provides a method for a puSTA to directly share an obtained TXOP with a pdSTA. In Embodiment 3, the primary channel of the BSS to which the first link belongs is different from the primary channel of the BSS to which the second link belongs. FIG. 13 is a schematic flowchart of a communication method provided in Embodiment 3. In FIG. 13, the relay device has two affiliated devices, and the two devices are a uSTA and a dSTA.

As illustrated in FIG. 13, the operating channels (for operation) of the BSS to which the uplink belongs include C1 and C2 (where C1 and C2 are operating channel sets), and C1 is the primary channel. The operating channels (for operation) of the BSS to which the downlink belongs include C2, or C1 and C2 (i.e., C1+C2), and C2 is the primary channel.

The puSTA obtains a TXOP on Channels C1 and C2. The puSTA may transmit a first trigger frame to initiate a relay-based TXOP sharing. The first trigger frame may be, for example, an updated MU-RTS TXS trigger frame. The first trigger frame can indicate the target with which a portion of the time duration of the TXOP is shared (i.e., the pdSTA).

A User Information field (User Info field) carried in the first trigger frame may be addressed to the pdSTA (i.e., the target station in the User Info field). The time duration allocated to the pdSTA may be specified in the Allocation Duration subfield of the corresponding User Information Field carried in the first trigger frame. Optionally, the first trigger frame may indicate that the pdSTA is an "initiator of MPDU(s) that need to be forwarded via relaying". Optionally, the first trigger frame may indicate the length value of an uplink PPDU (i.e., PPDU2-1 in FIG. 13) transmitted by the pdSTA in the "Uplink LENGTH (UL LENGTH)" field. Optionally, the first trigger frame may indicate the channel information (i.e., the primary channel information for C2) for the transmission of uplink PPDUs by the uSTA in the Resource Unit (RU Allocation) subfield.

Optionally, another User Information field (User Info field) in the first trigger frame may be addressed to the uSTA (i.e., the target station in the User Info field). Optionally, the first trigger frame may indicate the time duration allocated to the uSTA for relay forwarding in the Allocation Duration subfield in the first trigger frame. Optionally, the first trigger frame may indicate that the TXOP sharing role of the uSTA is "a relay station configured to forward MPDU(s)". Optionally, the first trigger frame may indicate the length value of an uplink PPDU (i.e., PPDU2-2 in FIG. 13) transmitted by the uSTA, which carries a to-be-forwarded MPDU in the "Uplink LENGTH (UL LENGTH)" field,. Optionally, the first trigger frame may indicate the channel information (i.e., the primary channel information where C1 is located) for the uSTA to transmit uplink PPDU(s) in the Resource Unit (RU Allocation) subfield.

Optionally, the puSTA may transmit a CTS-to-self frame before transmitting the first trigger frame.

The AP may utilize another portion of frequency domain resources (i.e., Channel C1) and another portion of time domain resources (i.e., TXOP allocation time duration) within the obtained TXOP to perform transmissions with the relay, which includes the transmission of downlink SU PPDUs or MU PPDUs, and/or uplink SU PPDUs or MU PPDUs or TB PPDUs. Therefore, the first trigger frame may indicate the target of frame exchange (e.g., the uSTA in FIG. 13) in another User Information field (User Info field), that is, indicate in the TXOP Sharing Role subfield that the uSTA is "a receiver of AP-initiated SU PPDU or MU PPDU transmission". The frequency band for frame exchange with the uSTA (Channel C1 in FIG. 13) may be specified in the Resource Unit Allocation subfield in the first trigger frame. Optionally, another User Information field (User Info field) in the first trigger frame may be addressed to the dSTA (i.e., the target station in the User Info field). Optionally, the first trigger frame may indicate that the TXOP sharing role of the dSTA is "a relay station configured to forward MPDU(s)". Optionally, the first trigger frame may indicate the channel information (i.e., the primary channel information for C2) for the dSTA to transmit downlink PPDUs in the Resource Unit (RU Allocation) subfield.

After receiving the first trigger frame, the pdSTA obtains the information content of the User Information field addressed to itself. Within the time allocation range and TXOP sharing frequency band indicated by the trigger frame, the pdSTA may transmit one or more non-TB PPDUs. The first PPDU in the one or more non-TB PPDUs transmitted by the pdSTA can carry a CTS frame for acknowledgment. In addition, the pdSTA may transmit a PPDU (PPDU2-1 in FIG. 13) to the dSTA, which carries frames that need to be transmitted via relaying. Optionally, after the relay respond with an ACK frame, the relay may transmit PPDU2-2 to the puSTA. After receiving PPDU2-2, the puSTA may respond with an ACK frame. After receiving the ACK frame, the relay may optionally respond with an ACK frame (i.e., ACK) to acknowledge that puSTA has received the frame. Following this, if there is remaining time in the allocated TXOP, the pdSTA may also initiate relay-based frame exchange.

After receiving the first trigger frame, the uSTA obtains the information content in the User Information field addressed to itself. Based on the frequency band information (i.e., Channel C1 in FIG. 13) indicated in the User Information field, a CTS frame is transmitted to the puSTA to acknowledge the upcoming frame exchange on Channel C1. Subsequently, the puSTA may transmit a PPDU (PPDU1-1 in FIG. 13) to the uSTA, which carries frames that need to be transmitted via relaying. After receiving the frames carried in PPDU1-1 which need to be transmitted via relaying, the uSTA of the relay may respond with an ACK frame to the puSTA. Subsequently, the dSTA of the relay may transmit PPDU1-2, carrying the frames that need to be transmitted via relaying, to the pdSTA through Channel C2. After receiving PPDU1-2, the pdSTA may respond with an ACK for acknowledgement. Subsequently, the uSTA may respond with an ACK frame to the puSTA to indicate the successful reception of the frames transmitted via the relay.

It should be noted that if the relay device is a device not supporting synchronous transmit and receive on two links, in order to avoid interference caused by the relay device's synchronous transmit and receive on uplink and downlink, it is necessary to ensure that the end time of a PPDU received by the relay device on the uplink is aligned with the end time of a PPDU received by the relay device on the downlink. That is, the end time of PPDU1-1 is aligned with the end time of PPDU2-1, and the end time of PPDU2-2 is aligned with the end time of PPDU1-2.

### Embodiment 4

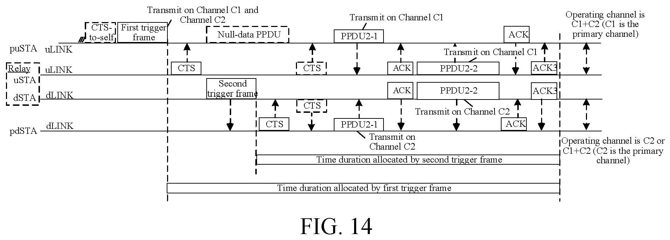

Embodiment 4 provides a method for a puSTA to directly share an obtained TXOP with a pdSTA. In Embodiment 4, the primary channel of the BSS to which the first link belongs is different from the primary channel of the BSS to which the second link belongs. FIG. 14 is a schematic flowchart of a communication method provided in Embodiment 4. In FIG. 14, the relay device has two affiliated devices, and the two devices are a uSTA and a dSTA.

As illustrated in FIG. 14, the operating channels (for operation) of the BSS to which the uplink belongs include C1 and C2 (where C1 and C2 are operating channel sets), and C1 is the primary channel. The operating channels (for operation) of the BSS to which the downlink belongs include C2, or C1 and C2 (i.e., C1+C2), and C2 is the primary channel.

The puSTA obtains a TXOP on Channels C1 and C2. The puSTA may transmit a first trigger frame to initiate a relay-based TXOP sharing. The first trigger frame may be, for example, an updated MU-RTS TXS trigger frame. The first trigger frame can indicate the target with which a portion of the time duration of the TXOP is shared (i.e., the dSTA).

A User Information field (User Info field) carried in the first trigger frame may be addressed to the pdSTA (i.e., the target station in the User Info field). The time duration allocated to the dSTA may be specified in the Allocation Duration subfield of the corresponding User Information field carried in the first trigger frame. The frequency band allocated to the dSTA (e.g., Channel C2 in FIG. 14) may be specified in the Resource Unit Allocation subfield (RU Allocation subfield) in the first trigger frame. Optionally, the first trigger frame may indicate that the TXOP sharing role of the dSTA may be "a station that needs to further share the shared portion of TXOP frequency domain resources and time domain resources with the peer station of the relay".

Optionally, the puSTA may transmit a CTS-to-self frame before transmitting the first trigger frame.

The AP may utilize another portion of frequency domain resources (i.e., Channel C1) and another portion of time domain resources (i.e., TXOP allocation time duration) within the obtained TXOP to perform transmissions with the relay, which includes the transmission of downlink SU PPDUs or MU PPDUs, and/or uplink SU PPDUs or MU PPDUs or TB PPDUs. Therefore, the first trigger frame may indicate the target of frame exchange (e.g., the uSTA in the figure) in another User Information field (User Info field). Optionally, the first trigger frame may indicate in the TXOP Sharing Role subfield that the uSTA is "a receiver of an AP-initiated SU PPDU or MU PPDU transmission". The frequency band for frame exchange with the uSTA (Channel C1 in FIG. 14) may be specified in the Resource Unit allocation subfield in the first trigger frame. Optionally, another User Information field (User Info field) in the first trigger frame may be addressed to the dSTA (i.e., the target station in the User Info field). Optionally, the first trigger frame may indicate that the TXOP sharing role of the dSTA is "a relay station configured to forward MPDU(s)". Optionally, the first trigger frame may indicate the channel information (i.e., the primary channel information for C2) for the dSTA to transmit downlink PPDUs in the Resource Unit (RU Allocation) subfield. Optionally, another User Information field (User Info field) in the first trigger frame may be addressed to the uSTA (i.e., the target station in the User Info field). Optionally, the first trigger frame may indicate that the TXOP sharing role of the uSTA is "a relay station configured to forward MPDU(s)". Optionally, the first trigger frame may indicate the channel information (i.e., the primary channel information for C1) for the uSTA to transmit uplink PPDUs in the Resource Unit (RU Allocation) subfield,.

After receiving the first trigger frame, the relay may respond with a CTS frame on Channels C1 and C2.After receiving the first trigger frame, the dSTA of the relay obtains the information content in the User Information field addressed to itself. Within the time allocation range and TXOP sharing frequency band indicated by the first trigger frame, the dSTA may transmit a second trigger frame. The second trigger frame indicates the target with which a portion of the time duration of the TXOP is shared (i.e., the pdSTA).

Optionally, the second trigger frame carries a User Information field (User Info field) addressed to the pdSTA. The time duration allocated to the pdSTA may be specified in the Allocation Duration subfield of the corresponding User Information field carried in the second trigger frame. The frequency band allocated to the pdSTA (Channel C2 in FIG. 14) may be specified in the Bandwidth Allocation subfield or Resource Unit Allocation subfield in the second trigger frame. Optionally, the second trigger frame may indicate that the TXOP sharing role of the pdSTA is "an initiator of MPDU(s) that need to be forwarded via relaying". Optionally, the second trigger frame may indicate the length value of an uplink PPDU (i.e., PPDU2-1 in FIG. 14) transmitted by the pdSTA in the "Uplink LENGTH (UL Length)" field. After receiving the second trigger frame, the pdSTA may respond with a CTS frame for acknowledgement. After receiving the CTS frame, the relay may optionally respond with a CTS frame to acknowledge the setup of the relay-based transmission.

Subsequently, within the shared TXOP time duration, the pdSTA may transmit a PPDU (PPDU2-1 in FIG. 14) carrying frames that need to be transmitted via relaying to the dSTA. The relay may transmit PPDU2-2 to the puSTA after the relay optionally responds with an ACK frame. After receiving PPDU2-2, the puSTA may respond with an ACK frame. After receiving the ACK frame from the puSTA, the relay may optionally respond with an ACK frame to acknowledge that the puSTA has received the frames. Following this, if there is remaining time in the allocated TXOP, the pdSTA may also initiate relay-based frame exchange.

After receiving the second trigger frame, the uSTA obtains the information content in the User Information field addressed to itself. Based on the frequency band information (i.e., Channel C1 in the figure) indicated in the corresponding User Information field, a CTS frame is transmitted to the puSTA to acknowledge the upcoming frame exchange on Channel C1. Subsequently, the puSTA may transmit a PPDU (PPDU1-1 in FIG. 14) to the uSTA, which carries frames that need to be transmitted via relaying. After receiving the frames carried by PPDU1-1 which need to be transmitted via relaying, the uSTA of the relay may respond with an ACK frame to the puSTA. Subsequently, the dSTA of the relay may transmit PPDU1-2, carrying the frames that need to be transmitted via relaying, to the pdSTA through Channel C2. After receiving PPDU1-2, pdSTA may respond with ACK for acknowledgement. Subsequently, the uSTA responds with an ACK to the puSTA to indicate the successful reception of the frames transmitted via the relay.

It should be noted that if the relay is a device not supporting synchronous transmit and receive (STR) on two links, in order to avoid interference caused by the relay device's synchronous transmit and receive on uplink and downlink, it is necessary to ensure that the end time of a PPDU received by the relay device on the uplink is aligned with the end time of a PPDU received by the relay device on the downlink. As illustrated in FIG. 14, the end time of PPDU1-1 is aligned with the end time of PPDU2-1, and the end time of PPDU2-2 is aligned with PPDU1-2.

Understandably, synchronizing the behavior of the source station, the relay, and destination station during TXOP sharing period is key to enabling relay-based frame exchange between the source station and the destination station through relay-based TXOP sharing. However, the related art lacks a defined synchronization mechanism between the AP, the S1G relay, and the STA for conducting TXOP sharing. Currently, the UHR proposal also does not include a mechanism for synchronizing the status of the operating channels of the BSSs to which the source station (sSTA), the relay, and the destination station (dSTA) belong. The present application can solve the problem of synchronizing the behavior of the operating channels of the BSSs to which the source station, the relay, and the destination station belong, as well as the issues in TXOP sharing, which is beneficial for improving network transmission efficiency and reducing the cost of relaying.

It should be noted that a "field" may also be referred to as a "domain", "subfield", or "sub-field". A field may occupy one or more bytes (byte/octet), or a field may occupy one or more bits.

The method embodiments of the present application have been described in detail above. The device embodiments of the present application will be described in detail below. It should be understood that the descriptions of the method embodiments and the descriptions of the device embodiments correspond to each other. Therefore, for parts not described in detail, reference may be made to the preceding method embodiments.

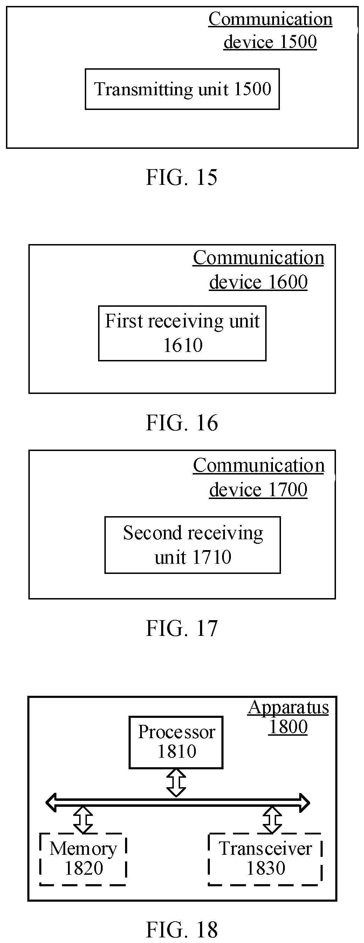

FIG. 15 is a schematic block diagram of a communication device 1500 provided in the embodiments of the present application. The communication device 1500 may be a first device. The communication device 1500 may include a transmitting unit 1510.

The transmitting unit 1510 is configured to transmit a first trigger frame. The first device communicates with a second device via a relay device, and the first trigger frame is used to indicate sharing of first resources within an obtained transmission opportunity (TXOP) by the first device with the second device and/or the relay device.

In an optional embodiment, the transmitting unit 1510 may be a transceiver 1830. The communication device 1500 may also include a processor 1810 and a memory 1820. The specific details are illustrated in FIG. 18.

FIG. 16 is a schematic block diagram of a communication device 1600 provided in the embodiments of the present application. The communication device 1600 may be a second device. The communication device 1600 may include a first receiving unit 1610.

The first receiving unit 1610 is configured to receive a first trigger frame transmitted by a first device. The second device communicates with the first device via a relay device, and the first trigger frame is used to indicate sharing of first resources within an obtained transmission opportunity (TXOP) by the first device with the second device.

In an optional embodiment, the first receiving unit 1610 may be a transceiver 1830. The communication device 1600 may also include a processor 1810 and a memory 1820. The specific details are illustrated in FIG. 18.

FIG. 17 is a schematic block diagram of a communication device 1700 provided in the embodiments of the present application. The communication device 1700 may be a relay device. The communication device 1700 may include a second receiving unit 1710.

The second receiving unit 1710 is configured to receive a first trigger frame transmitted by a first device. The first device communicates with a second device via a relay device, and the first trigger frame is used to indicate sharing of first resources within an obtained transmission opportunity (TXOP) by the first device with the relay device.

In an optional embodiment, the second receiving unit 1710 may be a transceiver 1830. The communication device 1700 may also include a processor 1810 and a memory 1820. The specific details are illustrated in FIG. 18.

FIG. 18 is a schematic block diagram of an apparatus for communication according to embodiments of the present application. The dashed line in FIG. 18 represents that the unit or module is optional. The apparatus 1800 may be configured to implement the methods described in the above method embodiments. The apparatus 1800 may be a chip or a communication device.

The apparatus 1800 may include one or more processors 1810. The processor 1810 can enable the apparatus 1800 to implement the methods described in the above method embodiments. A processor 1810 may be a general-purpose processor or a special-purpose processor. For example, the processor may be a central processing unit (CPU). Alternatively, the processor may also be other general-purpose processors, or a digital signal processor (DSP), an application-specific integrated circuit (ASIC), a field-programmable gate array (FPGA), or other programmable logic devices, a discrete gate or a transistor logic device, a discrete hardware component, or the like. The general-purpose processor may be a microprocessor, or may also be any conventional processor.

The apparatus 1800 may also include one or more memories 1820. A memory 1820 has a program executable on the processor 1810 stored thereon, which enables the processor 1810 to perform the methods described in the preceding method embodiments. The memory 1820 may be independent of the processor 1810 or integrated into the processor 1810.

The apparatus 1800 may also include a transceiver 1830. The processor 1810 may communicate with other devices or chips through the transceiver 1830. For example, the processor 1810 may transmit and receive data with other devices or chips through the transceiver 1830.

The embodiments of the present application further provide a computer-readable storage medium for storing a program. The computer-readable storage medium can be applied to the communication device provided in the embodiments of the present application, and the program enables the computer to perform the methods executed by the communication device in the various embodiments of the present application.

The embodiments of the present application further provide a computer program product. The computer program product includes a program. The computer program product can be applied to the communication device provided in the embodiments of the present application, and the program enables the computer to execute the methods performed by the communication device in the various embodiments of the present application.

The embodiments of the present application further provide a computer program. The computer program can be applied to the communication device provided in the embodiments of the present application, and the computer program enables the computer to perform the methods performed by the communication device in the various embodiments of the present application.

It should be understood that the terms "system" and "network" in the present application can be used interchangeably. Furthermore, the terms used in the present application are only for explaining specific embodiments of the present application and is not intended to limit the present application. The terms "first," "second," "third," "fourth," etc., used in the specification, claims, and accompanying drawings of the present application are used to distinguish different objects, not to describe a specific order. Furthermore, the terms "include", "have" and any variations thereof, are intended to cover non-exclusive inclusion.

In the embodiments of the present application, the term "indicate" may mean a direct indication, an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

In the embodiments of the present application, "B corresponding to A" means that B is associated with A, and B may be determined based on A. However, it should also be understood that determining B based on A does not mean that B is determined based solely on A; B may also be determined based on A and/or other information.

In the embodiments of the present application, the term "correspond" may indicate a relationship of direct or indirect correspondence between the two, or a relationship of association between the two, or a relationship of indicating and being indicated, or a relationship of configuring and being configured, or the like.

In the embodiments of the present application, "predefined" or "preconfigured" may be implemented by pre-storing the corresponding code, table or other means that can be used to indicate related information in a device (e.g., including an AP and an STA). The specific implementation manner thereof is not limited in the present application. For example, a predefined term can refer to one defined in a protocol.

In the embodiments of the present application, the term "and/or" herein is used to describe an association relationship between associated objects, for example, to indicate that there may be three relationships between the related objects. For example, "A and/or B" may represent that there are three cases: A exists alone, both A and B exist, and B exists alone. In addition, the character "/" herein generally indicates that related objects before and after this character are in an "or" relationship.

In the embodiments of the present application, the term "include" may refer to direct inclusion or indirect inclusion. Optionally, the term "include" mentioned in the embodiments of the present application may be replaced with "indicate" or "being used to determine". For example, "A includes B" which may be replaced with "A indicates B" or "A is used to determine B".

In the various embodiments of the present application, the order of the sequence numbers of the aforementioned processes does not imply an order of execution. The execution order of the processes should be determined by their functions and internal logic, and should not constitute any limitation on the implementation process of the embodiments of the present application.

In embodiments of the present application, the "protocol" may refer to a standard protocol in the field of communication, such as the WiFi protocol and related protocols applied in future WiFi communication systems, which is not limited in the present application.

In the several embodiments provided in the present application, it should be understood that the disclosed systems, apparatus and methods may be implemented in other ways. For example, the device embodiments described above are merely illustrative. For instance, the division of the units is only a logical functional division. In actual implementation, there may be other division methods. For example, multiple units or components may be combined or integrated into another system, or some features may be ignored or not executed. Another point is that the mutual coupling or direct coupling or communication connection shown or discussed may be an indirect coupling or communication connection through some interface, device or unit, and may be electrical, mechanical or other forms.

The unit described as a separate component may or may not be physically separate. The component shown as a unit may or may not be a physical unit, that is, it may be located in one place or it may be distributed across multiple network units. Some or all of the units may be selected to achieve the purpose of this embodiment according to actual needs.

In addition, the functional units in the various embodiments of the present application may be integrated into one processing unit, or each unit can exist physically separately, or two or more units may be integrated into one unit.

In the above embodiments, it may be implemented entirely or partially by software, hardware, firmware, or any combination thereof. When implemented using software, it may be implemented in whole or in part as a computer program product. The computer program product includes one or more computer instructions. When the computer program instructions are loaded and executed on a computer, all or part of the processes or functions described in the embodiments of the present application are generated. The computer may be a general-purpose computer, a special-purpose computer, a computer network, or other programmable device. The computer instructions may be stored in a computer-readable storage medium or transmitted from one computer-readable storage medium to another. For example, the computer instructions may be transmitted from one website station, computer, server, or data center to another website station, computer, server, or data center via wired (e.g., coaxial cable, fiber optic, digital subscriber line (DSL)) or wireless (e.g., infrared, wireless, or microwave) means. The computer-readable storage medium may be any available medium that a computer can read, or a data storage device such as a server or data center that integrates one or more available media. The available media may be magnetic media (e.g., floppy disks, hard disks, magnetic tapes), optical media (e.g., digital video discs (DVDs)), or semiconductor media (e.g., solid-state disks (SSDs)).

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
transmitting, by a first device, a first trigger frame;
wherein the first device communicates with a second device via a relay device, and the first trigger frame is used to indicate sharing of first resources within an obtained transmission opportunity (TXOP) by the first device with the second device and/or the relay device for frame exchange between the first device and the second device.

2. The method according to claim 1, wherein the first trigger frame includes a first field, the first field is used to indicate a TXOP sharing mode of the first trigger frame, and the TXOP sharing mode of the first trigger frame is a relay-based TXOP sharing mode in a case where the first field has a first value; wherein under the relay-based TXOP sharing mode, a TXOP shared by the first device is used for the first device and the second device to communicate via the relay device.

3. The method according to claim 1 or 2, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

4. The method according to any one of claims 1 to 3, wherein the first trigger frame includes a second field, and the second field is used to indicate a target of TXOP sharing.

5. The method according to claim 4, wherein
in a case where a value of the second field falls within a first range, the target of TXOP sharing is a device associated with the first device; or
in a case where the value of the second field falls within a second range, the target of TXOP sharing is a relay device or a peer device of a relay device, and a basic service set (BSS) to which the target of TXOP sharing, the second device, belongs differs from a BSS to which the first device belongs.

6. The method according to any one of claims 1 to 5, wherein the first resources include first frequency domain resources, the first trigger frame includes a third field, and the third field is used to indicate information about the first frequency domain resources.

7. The method according to any one of claims 1 to 6, wherein the first resources include first time domain resources, the first trigger frame includes a fourth field, and the fourth field is used to indicate information about the first time domain resources.

8. The method according to any one of claims 1 to 7, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of a data unit that needs to be forwarded via relaying;
that the target of TXOP sharing is a relay device configured to forward data units;
that the target of TXOP sharing needs to share a portion of the first resources with a peer device of the second device.

9. The method according to any one of claims 1 to 8, wherein the first trigger frame includes a sixth field, and the sixth field is used to indicate a length of an uplink or downlink physical layer protocol data unit (PPDU) for relay communication of a target of TXOP sharing within a shared TXOP.

10. The method according to any one of claims 1 to 9, wherein the first trigger frame is used to trigger the relay device to transmit a second trigger frame to a peer device of the relay device, and the second trigger frame is used for sharing a portion of the first resources with the peer device for relay communication.

11. The method according to claim 10, wherein a TXOP sharing mode of the second trigger frame is same as a TXOP sharing mode of the first trigger frame.

12. The method according to any one of claims 1 to 11, wherein a link between the relay device and the first device is a first link, a link between the relay device and the second device is a second link, and a BSS to which the first link belongs is same as or different from a BSS to which the second link belongs.

13. The method according to claim 12, wherein
in a case where a target of TXOP sharing includes the relay device, the first resources include frequency domain resources corresponding to a primary channel of the BSS to which the first link belongs; and/or
in a case where a target of TXOP sharing includes the second device, the first resources include frequency domain resources corresponding to a primary channel of the BSS to which the second link belongs.

14. The method according to claim 12 or 13, wherein a primary channel of the BSS to which the first link belongs is same as or different from a primary channel of the BSS to which the second link belongs.

15. The method according to any one of claim 14, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

16. The method according to claim 15, wherein a PPDU received by the relay device on the first link is a first PPDU, a PPDU received by the relay device on the second link is a second PPDU, and end time of the first PPDU is aligned with end time of the second PPDU.

17. A wireless communication method, comprising:
receiving, by a second device, a first trigger frame transmitted by a first device;
wherein the second device communicates with the first device via a relay device, and the first trigger frame is used to indicate sharing of first resources within an obtained transmission opportunity (TXOP) by the first device with the second device for frame exchange between the first device and the second device.

18. The method according to claim 17, wherein the first trigger frame includes a first field, the first field is used to indicate a TXOP sharing mode of the first trigger frame, and the TXOP sharing mode of the first trigger frame is a relay-based TXOP sharing mode in a case where the first field has a first value; wherein under the relay-based TXOP sharing mode, a TXOP shared by the first device is used for the first device and the second device to communicate via the relay device.

19. The method according to claim 17 or 18, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

20. The method according to any one of claims 17 to 19, wherein the first trigger frame includes a second field, and the second field is used to indicate a target of TXOP sharing.

21. The method according to claim 20, wherein
in a case where a value of the second field falls within a first range, the target of TXOP sharing is a device associated with the first device; or
in a case where the value of the second field fall within a second range, the target of TXOP sharing is a relay device or a peer device of a relay device, and a basic service set (BSS) to which the target of TXOP sharing belongs differs from a BSS to which the first device belongs.

22. The method according to any one of claims 17 to 21, wherein the first resources include first frequency domain resources, the first trigger frame includes a third field, and the third field is used to indicate information about the first frequency domain resources.

23. The method according to any one of claims 17 to 22, wherein the first resources include first time domain resources, the first trigger frame includes a fourth field, and the fourth field is used to indicate information about the first time domain resources.

24. The method according to any one of claims 17 to 23, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of a data unit that needs to be forwarded via relaying;
that the target of TXOP sharing is a relay device configured to forward data units;
that the target of TXOP sharing needs to share a portion of the first resources with a peer device of the relay device.

25. The method according to any one of claims 17 to 24, wherein the first trigger frame includes a sixth field, and the sixth field is used to indicate a length of an uplink or downlink physical layer protocol data unit (PPDU) for relay communication of a target of TXOP sharing within a shared TXOP.

26. The method according to any one of claims 17 to 25, wherein a link between the relay device and the first device is a first link, a link between the relay device and the second device is a second link, and a BSS to which the first link belongs is same as or different from a BSS to which the second link belongs.

27. The method according to claim 26, wherein the first resources include frequency domain resources corresponding to a primary channel of the BSS to which the second link belongs.

28. The method according to claim 26 or 27, wherein a primary channel of the BSS to which the first link belongs is same as or different from a primary channel of the BSS to which the second link belongs.

29. The method according to any one of claim 28, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

30. The method according to claim 29, wherein a PPDU received by the relay device on the first link is a first PPDU, a PPDU received by the relay device on the second link is a second PPDU, and end time of the first PPDU is aligned with end time of the second PPDU.

31. A wireless communication method, comprising:
receiving, by a relay device, a first trigger frame transmitted by a first device;
wherein the first device communicates with a second device via the relay device, and the first trigger frame is used to indicate sharing of first resources within an obtained transmission opportunity (TXOP) by the first device with the relay device for frame exchange between the first device and the second device.

32. The method according to claim 31, wherein the first trigger frame includes a first field, and the first field is used to indicate a TXOP sharing mode of the first trigger frame, the TXOP sharing mode of the first trigger frame is a relay-based TXOP sharing mode in a case where the first field has a first value; wherein under the relay-based TXOP sharing mode, a TXOP shared by the first device is used for the first device and the second device to communicate via the relay device.

33. The method according to claim 31 or 32, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

34. The method according to any one of claims 31 to 33, wherein the first trigger frame includes a second field, and the second field is used to indicate a target of TXOP sharing.

35. The method according to claim 34, wherein
in a case where a value of the second field falls within a first range, the target of TXOP sharing is a device associated with the first device; or
in a case where the value of the second field falls within a second range, the target of TXOP sharing is a relay device or a peer device of a relay device, and a basic service set (BSS) to which the target of TXOP sharing belongs differs from a BSS to which the first device belongs.

36. The method according to any one of claims 31 to 35, wherein the first resources include first frequency domain resources, the first trigger frame includes a third field, and the third field is used to indicate information about the first frequency domain resources.

37. The method according to any one of claims 31 to 36, wherein the first resources include first time domain resources, the first trigger frame includes a fourth field, and the fourth field is used to indicate information about the first time domain resources.

38. The method according to any one of claims 31 to 37, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of a data unit that needs to be forwarded via relaying;
that the target of TXOP sharing is a relay device configured to forward data units;
that the target of TXOP sharing needs to share a portion of the first resources with a peer device of the relay device.

39. The method according to any one of claims 31 to 38, wherein the first trigger frame includes a sixth field, and the sixth field is used to indicate a length of an uplink or downlink physical layer protocol data unit (PPDU) for relay communication of the relay device within a shared TXOP.

40. The method according to any one of claims 31 to 39, wherein the first trigger frame is used to trigger the relay device to transmit a second trigger frame to the peer device of the relay device, and the second trigger frame is used for sharing a portion of the first resources with the peer device for relay communication.

41. The method according to claim 40, wherein a TXOP sharing mode of the second trigger frame is same as a TXOP sharing mode of the first trigger frame.

42. The method according to any one of claims 31 to 41, wherein a link between the relay device and the first device is a first link, a link between the relay device and the second device is a second link, and a BSS to which the first link belongs is same as or different from a BSS to which the second link belongs.

43. The method according to claim 42, wherein the first resources include frequency domain resources corresponding to a primary channel of the BSS to which the first link belongs.

44. The method according to claim 42 or 43, wherein a primary channel of the BSS to which the first link belongs is same as or different from a primary channel of the BSS to which the second link belongs.

45. The method according to any one of claim 44, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

46. The method according to claim 45, wherein a PPDU received by the relay device on the first link is a first PPDU, a PPDU received by the relay device on the second link is a second PPDU, and end time of the first PPDU is aligned with end time of the second PPDU.

47. A communication device, wherein the communication device is a first device, and the communication device comprises:
a transmitting unit, configured to transmit a first trigger frame;
wherein the first device communicates with the second device via a relay device, and the first trigger frame is used to indicate sharing of first resources within an obtained transmission opportunity (TXOP) by the first device with the second device and/or the relay device for frame exchange between the first device and the second device.

48. The device according to claim 47, wherein the first trigger frame includes a first field, the first field is used to indicate a TXOP sharing mode of the first trigger frame, and the TXOP sharing mode of the first trigger frame is a relay-based TXOP sharing mode in a case where the first field has a first value; wherein under the relay-based TXOP sharing mode, the TXOP shared by the first device is used for the first device and the second device to communicate via the relay device.

49. The device according to claim 47 or 48, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

50. The device according to any one of claims 47 to 49, wherein the first trigger frame includes a second field, and the second field is used to indicate a target of TXOP sharing.

51. The device according to claim 50, wherein
in a case where a value of the second field falls within a first range, the target of TXOP sharing is a device associated with the first device; or
in a case where the value of the second field falls within a second range, the target of TXOP sharing is a relay device or a peer device of a relay device, and a basic service set (BSS) to which the target of TXOP sharing belongs differs from a BSS to which the first device belongs.

52. The device according to any one of claims 47 to 51, wherein the first resources include first frequency domain resources, the first trigger frame includes a third field, and the third field is used to indicate information about the first frequency domain resources.

53. The device according to any one of claims 47 to 52, wherein the first resources include first time domain resources, the first trigger frame includes a fourth field, and the fourth field is used to indicate information about the first time domain resources.

54. The device according to any one of claims 47 to 53, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of the data unit that needs to be forwarded via relaying;
that the target of TXOP sharing is a relay device configured to forward data units;
that the target of TXOP sharing needs to share a portion of the first resources with a peer device of the second device.

55. The device according to any one of claims 47 to 54, wherein the first trigger frame includes a sixth field, and the sixth field is used to indicate a length of an uplink or downlink physical layer protocol data unit (PPDU) for relay communication of a target of TXOP sharing within a shared TXOP.

56. The device according to any one of claims 47 to 55, wherein the first trigger frame is used to trigger the relay device to transmit a second trigger frame to a peer device of the relay device, and the second trigger frame is used for sharing a portion of the first resources with the peer device for relay communication.

57. The device according to claim 56, wherein a TXOP sharing mode of the second trigger frame is same as a TXOP sharing mode of the first trigger frame.

58. The device according to any one of claims 47 to 57, wherein a link between the relay device and the first device is a first link, a link between the relay device and the second device is a second link, and a BSS to which the first link belongs is same as or different from a BSS to which the second link belongs.

59. The device according to claim 58, wherein
in a case where a target of TXOP sharing includes the relay device, the first resources include frequency domain resources corresponding to a primary channel of the BSS to which the first link belongs; and/or
in a case where a target of TXOP sharing includes the second device, the first resources include frequency domain resources corresponding to a primary channel of the BSS to which the second link belongs.

60. The device according to claim 58 or 59, wherein a primary channel of the BSS to which the first link belongs is same as or different from a primary channel of the BSS to which the second link belongs.

61. The device according to any one of claim 60, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

62. The device according to claim 61, wherein a PPDU received by the relay device on the first link is a first PPDU, a PPDU received by the relay device on the second link is a second PPDU, and end time of the first PPDU is aligned with end time of the second PPDU.

63. A communication device, wherein the communication device is a second device, and the communication device comprises:
a first receiving unit, configured to receive a first trigger frame transmitted by a first device;
wherein the second device communicates with the first device via a relay device, and the first trigger frame is used to indicate sharing of first resources within an obtained transmission opportunity (TXOP) by the first device with the second device for frame exchange between the first device and the second device.

64. The device according to claim 63, wherein the first trigger frame includes a first field, the first field is used to indicate a TXOP sharing mode of the first trigger frame, and the TXOP sharing mode of the first trigger frame is a relay-based TXOP sharing mode in a case where the first field has a first value; wherein under the relay-based TXOP sharing mode, a TXOP shared by the first device is used for the first device and the second device to communicate via the relay device.

65. The device according to claim 63 or 64, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

66. The device according to any one of claims 63 to 65, wherein the first trigger frame includes a second field, and the second field is used to indicate a target of TXOP sharing.

67. The device according to claim 66, wherein
in a case where a value of the second field falls within a first range, the target of TXOP sharing is a device associated with the first device; or
in a case where the value of the second field falls within a second range, the target of TXOP sharing is a relay device or a peer device of a relay device, and a basic service set (BSS) to which the target of TXOP sharing belongs differs from a BSS to which the first device belongs.

68. The device according to any one of claims 63 to 67, wherein the first resources include first frequency domain resources, the first trigger frame includes a third field, and the third field is used to indicate information about the first frequency domain resources.

69. The device according to any one of claims 63 to 68, wherein the first resources include first time domain resources, the first trigger frame includes a fourth field, and the fourth field is used to indicate information about the first time domain resources.

70. The device according to any one of claims 63 to 69, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of a data unit that needs to be forwarded via relaying;
that the target of TXOP sharing belongs to a relay device configured to forward data units;
that the target of TXOP sharing needs to share a portion of the first resources with a peer device of the relay device.

71. The device according to any one of claims 63 to 70, wherein the first trigger frame includes a sixth field, and the sixth field is used to indicate a length of an uplink or downlink physical layer protocol data unit (PPDU) for relay communication of a target of TXOP sharing within a shared TXOP.

72. The device according to any one of claims 63 to 71, wherein a link between the relay device and the first device is a first link, a link between the relay device and the second device is a second link, and a BSS to which the first link belongs is same as or different from a BSS to which the second link belongs.

73. The device according to claim 72, wherein the first resources include frequency domain resources corresponding to a primary channel of the BSS to which the second link belongs.

74. The device according to claim 72 or 73, wherein a primary channel of the BSS to which the first link belongs is same as or different from a primary channel of the BSS to which the second link belongs.

75. The device according to claim 74, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

76. The device according to claim 75, wherein a PPDU received by the relay device on the first link is a first PPDU, a PPDU received by the relay device on the second link is a second PPDU, and end time of the first PPDU is aligned with end time of the second PPDU.

77. A communication device, wherein the communication device is a relay device, and the communication device comprises:
a second receiving unit, configured to receive a first trigger frame transmitted by a first device;
wherein the first device communicates with a second device via a relay device, and the first trigger frame is used to indicate sharing of first resources within an obtained transmission opportunity (TXOP) by the first device with the relay device for frame exchange between the first device and the second device.

78. The device according to claim 77, wherein the first trigger frame includes a first field, and the first field is used to indicate a TXOP sharing mode of the first trigger frame, the TXOP sharing mode of the first trigger frame is a relay-based TXOP sharing mode in a case where the first field has a first value; wherein under the relay-based TXOP sharing mode, a TXOP shared by the first device is used for the first device and the second device to communicate via the relay device.

79. The device according to claim 77 or 78, wherein the first trigger frame includes one or more user information fields, the one or more user information fields have a one-to-one correspondence with one or more devices, and the one or more user information fields are used to indicate sharing of a portion of resources within the obtained TXOP by the first device with the one or more devices for frame exchange between the first device and the second device.

80. The device according to any one of claims 77 to 79, wherein the first trigger frame includes a second field, and the second field is used to indicate a target of TXOP sharing.

81. The device according to claim 80, wherein
in a case where a value of the second field falls within a first range, the target of TXOP sharing is a device associated with the first device; or
in a case where the value of the second field falls within a second range, the target of TXOP sharing is a relay device or a peer device of a relay device, and a basic service set (BSS) to which the target of TXOP sharing belongs differs from a BSS to which the first device belongs.

82. The device according to any one of claims 77 to 81, wherein the first resources include first frequency domain resources, the first trigger frame includes a third field, and the third field is used to indicate information about the first frequency domain resources.

83. The device according to any one of claims 77 to 82, wherein the first resources include first time domain resources, the first trigger frame includes a fourth field, and the fourth field is used to indicate information about the first time domain resources.

84. The device according to any one of claims 77 to 83, wherein the first trigger frame includes a fifth field, the fifth field is used to indicate a role of a target of TXOP sharing, and the role includes one or more of the following:
that the target of TXOP sharing is a receiver of a data unit initiated by the first device;
that the target of TXOP sharing is a transmitter of a data unit that needs to be forwarded via relaying;
that the target of TXOP sharing is a relay device configured to forward data units;
that the target of TXOP sharing needs to share a portion of the first resources with a peer device of the relay device.

85. The device according to any one of claims 77 to 84, wherein the first trigger frame includes a sixth field, and the sixth field is used to indicate a length of an uplink or downlink physical layer protocol data unit (PPDU) for relay communication of the relay device within a shared TXOP.

86. The device according to any one of claims 77 to 85, wherein the first trigger frame is used to trigger the relay device to transmit a second trigger frame to the peer device of the relay device, and the second trigger frame is used for sharing a portion of the first resources with the peer device for relay communication.

87. The device according to claim 86, wherein a TXOP sharing mode of the second trigger frame is same as a TXOP sharing mode of the first trigger frame.

88. The device according to any one of claims 77 to 87, wherein a link between the relay device and the first device is a first link, a link between the relay device and the second device is a second link, and a BSS to which the first link belongs is same as or different from a BSS to which the second link belongs.

89. The device according to claim 88, wherein the first resources include frequency domain resources corresponding to a primary channel of the BSS to which the first link belongs.

90. The device according to claim 88 or 89, wherein a primary channel of the BSS to which the first link belongs is same as or different from a primary channel of the BSS to which the second link belongs.

91. The device according to any one of claims 90, wherein in a case where the primary channel of the BSS to which the first link belongs is different from the primary channel of the BSS to which the second link belongs, when the relay device performs frame exchange with the second device within a time period corresponding to a shared TXOP, the first device is capable of performing frame exchange with the relay device.

92. The device according to claim 91, wherein a PPDU received by the relay device on the first link is a first PPDU, a PPDU received by the relay device on the second link is a second PPDU, and end time of the first PPDU is aligned with end time of the second PPDU.

93. A communication device, comprising: a memory and a processor, wherein the memory is configured to store a program, and the processor is configured to invoke the program in the memory, to enable the communication device to perform the method according to any one of claims 1 to 46.

94. An apparatus, comprising a processor, wherein the processor is configured to invoke a program from a memory, to enable the apparatus to perform the method according to any one of claims 1 to 46.

95. A chip, comprising a processor, wherein the processor is configured to invoke a program from a memory, to enable a device equipped with the chip to perform the method according to any one of claims 1 to 46.

96. A computer-readable storage medium, having a program stored thereon, wherein the program enables a computer to perform the method according to any one of claims 1 to 46.

97. A computer program product, comprising a program, wherein the program enables a computer to perform the method according to any one of claims 1 to 46.

98. A computer program, wherein the computer program enables a computer to perform the method according to any one of claims 1 to 46.
